# FASCICULE DE BREVET EUROPEEN

(11) **EP 2 300 551 B1**
(45) Date de publication et mention de la délivrance du brevet: **12.10.2011**
(21) Numéro de dépôt: 09784455.9
(22) Date de dépôt: 01.07.2009
(51) Int. Cl.: C09J 11/06, C09J 5/02, C09J 5/06, B32B 27/06, B32B 7/12, A43B 13/12

(54) **UTILISATION D'UN PROMOTEUR D'ADHÉRENCE ENCAPSULE DANS UN JOINT DE COLLE AQUEUX COLLANT DEUX SUBSTRATS DONT L'UN AU MOINS COMPREND UN MATÉRIAU (TPE-PA)**
VERWENDUNG EINES EINGEKAPSELTEN HAFTPROMOTERS IN EINEM WASSERHALTIGEN HAFTSCHARNIER, DAS ZWEI SUBSTRATE BINDET, VON DENEN MINDESTENS EINES EIN (TPE-TPA-)MATERIAL ENTHÄLT
USE OF AN ENCAPSULATED ADHESION PROMOTER IN AN AQUEOUS ADHESIVE JOINT BONDING TWO SUBSTRATES, AT LEAST ONE OF WHICH COMPRISES A (TPE-PA) MATERIAL

(30) Priorité: 16.07.2008 FR 0854833
(43) Date de publication de la demande: 30.03.2011
(73) Titulaire: Arkema France, 92700 Colombes (FR)
(72) Inventeur: D'HERBECOURT, Bruno, F-27300 Bernay (FR); EUSTACHE, René-Paul, F-27170 Combon (FR)
(86) Numéro de dépôt international: PCT/FR2009/051275
(87) Numéro de publication internationale: WO 2010/007292

(56) Documents cités:
- WO-A-98/13406
- WO-A-2007/083072
- FR-A- 2 896 444

## Description

### Domaine de l'invention

La présente invention concerne l'assemblage par collage d'un premier substrat S1 à base d'élastomère thermoplastique (abrégé TPE) et / ou de polyamide (PA) homopolymère ou copolymère, et d'un second substrat S2, les substrats S1 et S2 pouvant être de même nature ou de nature différente.

Par la suite, on nomme (TPE-PA) ces différentes possibilités de composition pour le substrat S1 et éventuellement pour le substrat S2 s'il est de même nature. Aussi, par substrat (TPE-PA), on entend un substrat qui comprend au moins un élastomère TPE ou bien au moins un PA, ou encore un mélange d'au moins un TPE et d'au moins un PA.

La présente invention concerne également un produit stratifié formé par l'assemblage de tels substrats S1 et S2 au moyen d'un joint de colle aqueux.

Par joint de colle aqueux, on entend un joint dans lequel des compositions de primaires et/ou de colles aqueuses utilisées en couches successives sur les substrats en (TPE-PA) comprennent moins de 5% de solvants organiques.

La présente invention concerne également un procédé de fabrication d'un tel stratifié et son utilisation dans l'industrie de la chaussure, notamment pour la fabrication de semelles et tout particulièrement de semelles de chaussures de sport.

Un des principaux savoir-faire de l'industrie de la chaussure réside dans une bonne maîtrise des techniques de collage destinées à assembler des matériaux de nature chimique et de propriétés mécaniques différentes. Ce savoir-faire est particulièrement important dans le domaine de la chaussure de sport où les matériaux utilisés, notamment pour la fabrication des semelles, sont fréquemment des matériaux nouveaux. Cette exigence est décuplée par la recherche de la performance généralement liée à la chaussure de sport.

Durant la dernière décennie les matériaux à base de TPE-PA, tels que les matériaux commercialisés par la société Arkéma sous la marque Pébax® et Rilsan® se sont progressivement imposés dans le domaine de la chaussure haut de gamme, en particulier de sport, grâce à leurs propriétés mécaniques et notamment leur propriété de retour élastique exceptionnel.

Les substrats faits de ces matériaux en copolymère polyamide-bloc-polyéther, notamment pour la fabrication de semelles de chaussures de sport, sont généralement assemblés par collage à d'autres substrats au moyen d'un joint de colle.

De manière générale, le collage de ce type de substrat pour réaliser un stratifié nécessite au moins les opérations suivantes :
- le nettoyage des surfaces des substrats à coller, par exemple avec un solvant organique telle que la méthyléthylcétone (MEK) ou bien avec une solution détergente à base aqueuse ;
- l'application, généralement au pinceau, sur au moins la surface d'accostage du substrat TPE-PA (S1), d'une couche de joint de colle solvanté ou aqueux, pouvant éventuellement comprendre l'application d'un primaire généralement solvanté.
- l'accostage des deux substrats; et
- la mise sous presse de l'ensemble résultant de l'accostage.

Lors de ce collage, tant les compositions de primaire que les colles de l'art antérieur, conduisent à une évaporation d'une grande quantité de solvant organique. Ainsi, dans le cas de la fabrication d'un stratifié pour chaussure, on estime que la quantité moyenne de colle utilisée pour une chaussure est de 5g et celle de composition de primaire de 3g, et on peut évaluer l'émission de solvant à 2,9g par chaussure. En admettant une production de 10 000 chaussures par jour pour une unité de production, la quantité totale de solvant émis par cette unité est de 29 kg par jour.

L'utilisation d'un joint de colle à base aqueuse permet de diminuer cet inconvénient. Malheureusement, les niveaux d'adhérence et la qualité du collage, exprimée par la force de pelage des substrats à base de TPE-PA, des stratifiés de l'art antérieur est loin d'être optimale. Ainsi, avec des substrats en copolymère polyamide-bloc-polyéther de dureté 55 à 70 Shore D en moyenne (par exemple Pébax® 55-1, Pébax® 70-1) on obtient des forces de pelage faibles comprises entre environ 0.5 et 3 kg/cm. Or, les fabricants de chaussure imposent une résistance au pelage supérieure à 3kg/cm. En général, les joints de colle aqueux collent très difficilement, et dans la majorité des cas ils ne collent même pas du tout sur les substrats TAPE, avec lesquels ils sont peu ou pas compatibles.

Une des rares colles à base aqueuse qui permette de coller sur des substrats TPE-PA comprend des polyisocyanates aliphatiques hydrodispersibles, sous la forme d'émulsions. On peut citer par exemple l'hexaméthylène diisocyanate abrége HDI, par exemple les produits commercialisés sous la marque Desmodur® DN par la société Bayer. De par leur faible réactivité, ces polyisocyanates ne permettent pas à eux seuls d'obtenir des niveaux d'adhérence acceptables (c'est à dire une résistance au pelage supérieure à 3 kg/cm) sur supports TPE.

Des efforts ont été faits afin d'améliorer l'adhérence sur les substrats (TPE-PA) par incorporation de polymères tels que des silanes dans les formulations des primaires ou des colles ou par des techniques de traitements de surface tels que le flammage, le traitement aux Ultra Violets, le traitement de décharge corona, le traitement plasma, les traitements par faisceau d'électrons.

D'autres techniques incluent des traitements chimiques, tels que par exemple l'attaque des substrats à encoller à l'aide de solutions acides ou basiques ou bien à l'aide de solvants spécifiques aux matériaux. A titre d'exemple, le Métacrésol est particulièrement bien adapté comme solvant des polymères à base de polyamide. Un traitement de surface au métacrésol modifie la surface des substrats polyamide et permet aux isocyanates aliphatiques d'adhérer plus facilement à cette surface du PA. Mais ce type de solvant (métacrésol) est très toxique. De plus, ce traitement ne peut être utilisé que dans les cas où deux substrats PA doivent être collés ensembles, le métacrésol n'agissant pas sur d'autres types de substrats.

Ces solutions acides ou basiques ou ces solvants sont difficilement manipulables à causes de leur toxicité, de leur écotoxicité et/ou de leur caractère corrosif. Leur emploi est donc souvent limité et demande des équipements appropriés de protection, d'application, et de traitement des rejets. Plusieurs étapes complémentaires sont souvent nécessaires, comme la neutralisation des traitements chimiques, le rinçage et le séchage. Toutes ces étapes sont à l'origine de rejets, générateurs de pollutions. Ces étapes additionnelles du procédé d'assemblage sont consommatrices d'énergie et réduisent la productivité, notamment lorsque l'assemblage est effectué sur lignes industrielles.

De plus, ces traitements de surface finissent par modifier la surface des substrats, la solidité et les propriétés mécaniques de ces substrats.

Il existe des polyisocyanates de haute réactivité, généralement aromatiques, mais qui tels quels, ne sont pas dispersibles dans l'eau, car incompatibles avec l'eau, insolubles et sensibles à l'eau.

Il existe des colles latentes comprenant de tels groupements isocyanates de haute réactivité mais qui sont désactivés par une amine aliphatique pour éviter ces problèmes d'incompatibilité. Ces colles latentes peuvent se présenter sous la forme de dispersions aqueuses de particules solides. Les amines aliphatiques réagissent avec les groupements isocyanates, à la surface de ces particules solides, en créant des groupements urée. Une telle dispersion de particules à groupements isocyanates désactivés, donc non réactifs, peut être mélangée avec une dispersion de molécules à groupements polyuréthanne sans risque de réticulation, et former ainsi une composition de colle « monocomposant ». On appelle « colle latente » une colle qui, dans un premier temps, est appliquée sur un substrat puis est séchée de manière à évaporer toute l'eau de la colle, généralement à basse température pour empêcher les fonctions isocyanates de devenir réactives. De cette façon, la surface du substrat ainsi préencollé est non tackifiante pour permettre la manipulation et le stockage faciles du substrat. Dans un deuxième temps (généralement éloigné après stockage, transport, et/ou un dimensionnement du substrat préencollé), les pièces comportant le substrat préencollé sont assemblées par pressage et activation thermique simultanés. En effet, durant leur assemblage par pressage, les substrats sont portés à une température suffisante (de l'ordre de 60 à 90°C) pour permettre la réactivité des polyisocyanates encapsulés. Une dernière étape de refroidissement du stratifié formé par les substrats collés est ensuite nécessaire.

Un tel procédé de préencollage puis collage à chaud est généralement employé par l'industrie automobile ou de l'ameublement. Ce procédé consiste alors en une application en continu au rouleau d'une colle généralement monocomposant (groupements polyuréthanes et isocyanates dans la même composition) sur un substrat.

La colle est ensuite séchée pour faire s'évaporer l'eau, mais non activée de sorte que les groupements polyuréthanes et isocyanates ne réticulent pas ensemble. En effet, si lors de l'activation, il n'y a pas eu de séchage préalable, l'eau, au contant direct des isocyanates, empêche ou perturbe la réaction normale de réticulation des isocyanates avec les polyuréthanes. Les molécules d'isocyanate réticulent entre elles (auto-réticulation) pour former un précipité en milieux aqueux.

Les substrats sont ensuite stockés sous forme de bobines par exemple. Généralement, une découpe de ces bobines est ensuite effectuée en fonction de la géométrie des pièces à coller. Les pièces sont accostées sous pression à un autre substrat tout en étant simultanément soumises à une augmentation de température pour activer la colle (c'est à dire la réticulation) et permettre le collage des deux substrats.

Dans ce type de collage, les pièces doivent pouvoir résister à la fois à une haute pression et à une haute température pour ne pas risquer d'être endommagées, détériorées ou déformées, ni de voir leurs propriétés mécaniques modifiées.

Par ailleurs, un tel procédé de collage en deux temps (pré-encollage puis collage) n'est pas adapté pour le collage de stratifiés fabriqués dans le domaine de la chaussure. En particulier, le procédé de collage latent décrit ci-dessus ne peut pas s'appliquer à des stratifiés formés par des matériaux à la fois plus épais et plus sensibles à la chaleur. Les pièces sont généralement de formes complexes (pièces moulées) et nécessitant des collages rapides successifs, qui impliquent déjà un grand nombre d'étapes sur ligne industrielle. De plus, il n'est pas toujours possible de chauffer, notamment pendant le pressage, la totalité de la pièce, selon la forme de la pièce et les matériaux qui la composent.

La présente invention a donc pour but d'améliorer l'adhérence des matériaux à base de TPE-PA aux joints de colle aqueux. La présente invention a notamment pour but de fournir une composition de colle à base aqueuse, prête à l'emploi, qui parvient à coller des substrats TPE-PA à tout autre type de substrat, pour fabriquer un stratifié qui présente un niveau d'adhérence amélioré, de résistance au pelage au moins supérieure à 3 kg/cm.

La présente invention a également pour but de fournir un procédé de fabrication d'un tel stratifié simple et facile à mettre en oeuvre, qui ne présente pas les inconvénients de l'art antérieur, qui évite notamment un dégagement important de solvant, qui présente le moins d'étapes possibles, pour diminuer les temps d'assemblage, et qui ne modifie pas de manière abusive les propriétés mécaniques du substrat.

La présente invention a encore pour but d'augmenter l'adhérence des matériaux TPE-PA avec les joints de colle aqueux et d'éviter ainsi l'utilisation de primaires et/ ou de colles à base de solvants.

La demanderesse a démontré que, de manière surprenante, l'utilisation dans un joint de colle aqueux, de dispersions aqueuses de molécules à fonctions isocyanates de haute réactivité encapsulées, permettait un collage instantané des substrats à base de matériaux TPE-PA, et augmentait même l'adhérence de ces substrats avec d'autres types de substrats.

### Résumé de l'invention

La présente invention a donc pour objet l'utilisation d'un promoteur d'adhérence encapsulé (P) en quantité efficace dans un joint de colle aqueux, ledit joint de colle aqueux étant destiné à coller une surface d'un premier substrat (S1) à une surface d'un second substrat (S2), l'un au moins (S1) desdits deux substrats comprenait un matériau (TPE-PA) comprenant au moins un élastomère thermoplastique (TPE) et/ou au moins un polyamide (PA), ledit promoteur d'adhérence (P) comprenant au moins une molécule organique comportant au moins deux fonctions isocyanate bloquées par encapsulation de ladite molécule organique.

Avantageusement, ledit joint de colle aqueux comprend au moins une couche de primaire aqueux et/ou au moins une couche de colle aqueuse, ledit promoteur d'adhérence encapsulé (P) étant utilisé dans ledit primaire aqueux et/ou ladite colle aqueuse selon une teneur en promoteur d'adhérence (P) représentant de 0,5 à 20% en masse de matière active, de préférence de 0,5 à 10% en masse de matière active, sur la masse totale du joint de colle.

Avantageusement, ladite colle et/ou ledit primaire sont sous forme bi-composant :
- un premier composant comprenant une résine fonctionnalisée ou non, en solution ou en dispersion dans l'eau, et réactif avec les fonctions isocyanates,
- un deuxième composant comprenant un réticulant en solution ou en dispersion dans l'eau, ledit réticulant comprenant au moins une molécule à groupement(s) isocyanate(s) aliphatique(s) bloqué(s) ou non bloqué(s) et/ou au moins ledit promoteur d'adhérence encapsulé (P).

Avantageusement, ledit premier composant et ledit deuxième composant sont inclus dans une composition monocomposant de colle et/ou de primaire prête à l'emploi.

Avantageusement, ledit promoteur d'adhérence encapsulé (P) comprend au moins une des molécules organiques aromatiques à groupements isocyanates suivantes : le 4,4'-methylene di(phenylisocyanate) (MDI), l'isophorone diisocyanate (IPDI), le toluylene diisocyanate (TDI), le toluylene diisocyanate-urethdione (TDI-U), TDI-urée, naphtalene-1,5-diisocyanate (NDI), 3,3'-dimethyl biphenyl-4,4'-diisocyanate (TODI) et l'isocyanurate de IPDI (IPDI-T) et leurs mélanges.

Avantageusement, ledit promoteur d'adhérence encapsulé comprend au moins un isocyanate aromatique de type TDI et/ ou de type IPDI.

Avantageusement, ladite encapsulation est réalisée au moyen d'au moins un agent encapsulant choisi parmi les amines aliphatiques et leurs mélanges.

Avantageusement, ledit au moins un agent encapsulant est choisi parmi : la 2-pentaméthylène-1,5-diamine et ses isomères et homologues. Par homologues, on entend les molécules (alcanes, alcènes...) à fonctions amines, et de structure chimique proche, ayant sensiblement le même nombre d'atomes de carbone, à 1, 2 ou 3 atomes de carbone près. De préférence, ces homologues sont la 1,6-hexaméthylène diamine, di-sec-butyl amine ; éthylène diamine ; 1,3-propylène diamine ; diéthylène triamine ; triéthylène tétramine; 3,3'-diméthyl-4,4'-diaminodicyclohexyl méthane; méthylnonane diamine ; isophorone diamine ; 4,4'-diaminodicyclohexyl méthane ; alkanol amine et diamine, telle que l'éthanolamine et diéthanolamine; et leurs mélanges.

Avantageusement, ledit au moins un TPE est choisi parmi les COPE et/ ou les TPU et/ ou les PEBA et/ ou leur mélange.

Avantageusement, le matériau du substrat S1 et le matériau du substrat S2 sont de même nature chimique, c'est à dire que le substrat S1 comme le substrat S2 sont à base de matériau TPE/PA. Dans ce cas, S2 comme S1, comprend au moins un élastomère thermoplastique (TPE) ou au moins un polyamide (PA) ou un mélange de TPE et de PA.

Avantageusement, le matériau du substrat S1 et le matériau du substrat S2 sont de nature différente, S2 étant choisi parmi les TPE, les homopolymères et les copolymères tels que les polyoléfines ; les polyamines ; les polyamides; les polyesters; les polyéthers; les polyesteréthers; les polyimides ; les polycarbonates ; les résines phénoliques ; les polyuréthanes réticulés ou non, notamment sous forme de mousse; les poly(éthylène acétate de vinyle) ; les élastomères naturels ou synthétiques tels que les polybutadiènes, les polyisoprènes, les styrène-butadiène-styrène (SBS), les styrène-butadiène-acrylonitrile (SBN), les polyacrylonitriles ; les tissus naturels ou synthétiques, notamment les tissus en fibres de polymères organiques tels que les tissus en fibres de polypropylène, polyéthylène, polyesters, alcool polyvinylique, polyacétate de vinyle, polychlorure de vinyle, polyamide ; les tissus en fibres de verre ou en fibres de carbone, ainsi que les matériaux comme le cuir, le papier et le carton ; et leurs mélanges.

La présente invention a également pour objet un procédé d'assemblage par collage de deux substrats S1 et S2 au moyen d'un joint de colle aqueux, l'un au moins desdits substrats étant en matériau (TPE-PA) comprenant au moins un élastomère thermoplastique TPE et/ou au moins un polyamide PA, le dit procédé comprenant les étapes suivantes dans l'ordre :
(a) nettoyage de la surface du/des substrats (TPE-PA) avec une solution de nettoyage ;
(b) application sur ladite surface d'au moins un des deux substrats, d'un joint de colle aqueux comprenant un promoteur d'adhérence tel que défini précédemment ;
(c) cuisson du joint de colle à une température comprise dans la gamme allant de 60°C à 150°C;
(d) accostage de ladite surface comportant le joint de colle aqueux d'un des substrats avec une surface de l'autre substrat pour former un ensemble comprenant les deux substrats avec entre eux le joint de colle aqueux ;
(e) mise sous presse de l'ensemble;
(f) et après retrait de la presse, récupération de l'ensemble sous forme d'un produit stratifié.

Avantageusement, l'étape (b) d'application dudit joint de colle comprend:
- l'application d'une couche de primaire comprenant un promoteur d'adhérence P à base d'isocyanate aromatique hautement réactif encapsulé ;
- l'application d'une couche de colle bicomposant à base d'isocyanate aliphatique non bloqué faiblement réactif.

La présente invention a également pour objet un produit stratifié, notamment semelle de chaussure, comprenant un premier substrat (S1) et un second substrat (S2) adhérant l'un à l'autre au moyen d'un joint de colle aqueux (J), ledit joint de colle aqueux comprenant au moins un promoteur d'adhérence encapsulé conforme à celui défini précédemment.

La présente invention a également pour objet un joint de colle aqueux promoteur d'adhérence, destiné à coller une surface d'un premier substrat (S1) à une surface d'un second substrat (S2), l'un au moins desdits substrats comprenant un matériau (TPE-PA) comprenant au moins un élastomère thermoplastique (TPE) et/ou au moins un polyamide (PA), ledit joint de colle comprenant un promoteur d'adhérence encapsulé conforme à celui défini précédemment.

Avantageusement, ledit au moins un substrat TPE/PA comprend au moins un matériau en TPE amorphe ou quasi amorphe et/ou en polyamide amorphe ou quasi amorphe. Ledit matériau à de préférence une teneur en TPE amorphe ou quasi amorphe et/ou en polyamide amorphe ou quasi amorphe représentant de 5 à 70% en poids du poids total dudit matériau.

Avantageusement, ledit au moins un TPE amorphe ou quasi amorphe est choisi parmi : les COPE amorphes ou quasi amorphes et/ou les TPU amorphes ou quasi amorphes et/ ou les PEBA amorphes ou quasi amorphes.

### Description détaillée de l'invention :

Selon la présente invention, on utilise un promoteur d'adhérence (P) dans la composition d'un joint de colle aqueux appliqué sur un substrat S1 à base de (TPE-PA), ce qui permet d'augmenter l'adhérence de ladite surface à tout substrat S2 (identique ou différent du substrat S1).

### 1- Substrat S1

Les matériaux (TPE-PA) du substrat S1 selon l'invention, comprennent au moins un élastomère thermoplastique (TPE) et/ou au moins un polyamide (PA) et/ ou un mélange d'au moins un TPE et d'au moins un PA.

Par «polymère thermoplastique élastomère (TPE)», on entend un copolymère à blocs comportant, en alternance, des blocs ou segments dits durs ou rigides et des blocs ou segments dits souples ou flexibles.

A titre d'exemple de copolymère à blocs durs et à blocs souples, on peut citer respectivement (a) les copolymères à blocs polyesters et blocs polyéthers (appelés aussi COPE ou copolyétheresters), (b) les copolymères à blocs polyuréthanes et blocs polyéthers ou polyesters (appelés aussi TPU abréviation de polyuréthanes thermoplastiques) et (c) les copolymères à blocs polyamide et blocs polyéther (appelés aussi PEBA selon l'IUPAC).
(a) S'agissant des COPE ou copolyétheresters, ce sont des copolymères à blocs polyesters et blocs polyéthers. Ils sont constitués de blocs polyéthers souples issus de polyétherdiols et de blocs polyesters rigides qui résultent de la réaction d'au moins un diacide carboxylique avec au moins un motif diol court allongeur de chaîne. Les blocs polyesters et les blocs polyéthers sont reliés par des liaisons esters résultant de la réaction des fonctions acides de l'acide dicarboxylique avec les fonctions OH du polyétherdiol. L'enchaînement des polyéthers et des diacides forme les blocs souples alors que l'enchaînement du glycol ou du butane diol avec les diacides forme les blocs rigides du copolyétherester. Le diol court allongeur de chaîne peut être choisi dans le groupe constitué du neopentylglycol, du cyclohexanediméthanol et des glycols aliphatiques de formule HO(CH2)nOH dans laquelle n est un entier valant de 2 à 10.
   Avantageusement, les diacides sont des acides dicarboxyliques aromatiques ayant de 8 à 14 atomes de carbone. Jusqu'à 50 % en mole de l'acide aromatique dicarboxylique peut être remplacé par au moins un autre acide aromatique dicarboxylique ayant de 8 à 14 atomes de carbone, et/ou jusqu'à 20 % en mole peut être remplacé par un acide aliphatique dicarboxylique ayant de 2 à 14 atomes de carbone.
   A titre d'exemple d'acides aromatiques dicarboxyliques, on peut citer l'acide téréphtalique, isophtalique, bibenzoïque, naphtalène dicarboxylique, l'acide 4,4'-diphénylenedicarboxylique, l'acide bis(p-carboxyphényl) méthane, l'éthylène bis p-benzoïque acide, l'acide 1-4 tétraméthylène bis(p-oxybenzoïque), l'acide éthylène bis (p-oxybenzoïque), l'acide 1,3-triméthylène bis (p-oxybenzoique).
   A titre d'exemple de glycols, on peut citer l'éthylène glycol, le 1,3-triméthylène glycol, le 1,4-tétraméthylèneglycol, le 1,6-hexaméthylène glycol, le 1,3 propylène glycol, le 1,8 octaméthylèneglycol, le 1,10-décaméthylène glycol et le 1,4-cyclohexylène diméthanol. Les copolymères à blocs polyesters et blocs polyéther sont, par exemple, des copolymères ayant des motifs polyéthers dérivés de polyétherdiols tels que le polyéthylène glycol (PEG), le polypropylène glycol (PPG), le polytriméthylène glycol (PO3G) ou le polytétraméthylène glycol (PTMG), des motifs diacide carboxylique tels que l'acide téréphtalique et des motifs glycol (éthanediol) ou butane diol, 1-4. De tels copolyétheresters sont décrits dans les brevets EP 402 883 et EP 405 227. Ces polyétheresters sont des élastomères thermoplastiques. Ils peuvent contenir des plastifiants.
(b) S'agissant des TPU, on peut citer les polyétheruréthanes qui résultent de la condensation de blocs polyéthers souples qui sont des polyétherdiols et de blocs rigides polyuréthanes issus de la réaction d'au moins un diisocyanate pouvant être choisi parmi les diisocyanate aromatiques (ex : MDI, TDI) et les diisocyanates aliphatiques (ex : HDI ou hexaméthylènediisocyanate) avec au moins un diol court. Le diol court allongeur de chaîne peut être choisi parmi les glycols cités plus haut dans la description des copolyétheresters. Les blocs polyuréthanes et les blocs polyéthers sont reliés par des liaisons résultant de la réaction des fonctions isocyanates avec les fonctions OH du polyétherdiol.
   On peut encore citer les polyesteruréthanes qui résultent de la condensation de blocs polyesters souples qui sont des polyesterdiols et de blocs rigides polyuréthanes issus de la réaction d'au moins un diisocyanate avec au moins un diol court. Les polyesterdiols résultent de la condensation de diacides carboxyliques avantageusement choisis parmi les diacides aliphatiques dicarboxyliques ayant de 2 à 14 atomes de carbone et de glycols qui sont des diols courts allongeurs de chaîne choisis parmi les glycols cités plus haut dans la description des copolyétheresters. Ils peuvent contenir des plastifiants.
(c) S'agissant des PEBA, ils résultent de la polycondensation de blocs polyamides à extrémités réactives avec des blocs polyéthers à extrémités réactives, telles que, entre autres :
   1) blocs polyamides à bouts de chaîne diamines avec des blocs polyoxyalkylènes à bouts de chaînes dicarboxyliques.
   2) blocs polyamides à bouts de chaînes dicarboxyliques avec des blocs polyoxyalkylènes à bouts de chaînes diamines, obtenues par cyanoéthylation et hydrogénation de blocs polyoxyalkylène alpha-oméga dihydroxylées aliphatiques appelées polyétherdiols
   3) blocs polyamides à bouts de chaînes dicarboxyliques avec des polyétherdiols, les produits obtenus étant, dans ce cas particulier, des polyétheresteramides.

Les blocs polyamides à bouts de chaînes dicarboxyliques proviennent, par exemple, de la condensation de précurseurs de polyamides en présence d'un diacide carboxylique limiteur de chaîne.

Les blocs polyamides à bouts de chaînes diamines proviennent par exemple de la condensation de précurseurs de polyamides en présence d'une diamine limiteur de chaîne. La masse molaire en nombre Mn des blocs polyamides est comprise entre 400 et 20000 g/mole et de préférence entre 500 et 10000 g/mole.

Les polymères à blocs polyamides et blocs polyéthers peuvent aussi comprendre des motifs répartis de façon aléatoire.

On peut utiliser avantageusement trois types de blocs polyamides.

Selon un premier type, les blocs polyamides proviennent de la condensation d'un diacide carboxylique, en particulier ceux ayant de 4 à 20 atomes de carbone, de préférence ceux ayant de 6 à 18 atomes de carbone et d'une diamine aliphatiques ou aromatiques, en particulier celles ayant de 2 à 20 atomes de carbone, de préférence celles ayant de de 6 à 14 atomes de carbone.

A titre d'exemples d'acides dicarboxyliques, on peut citer l'acide 1,4-cyclohexyldicarboxylique, les acides butanedioïque, adipique, azélaïque, subérique, sébacique, dodécanedicarboxylique, octadécanedicarboxylique et les acides téréphtalique et isophtalique, mais aussi les acides gras dimérisés.

A titre d'exemples de diamines, on peut citer la tétraméthylène diamine, l'hexaméthylènediamine, la 1,1'0-décaméthylènediamine, la dodécaméthylènediamine, la triméthylhexaméthylène diamine, les isomères des bis-(4-aminocyclohexyl)-méthane (BACM), bis-(3-méthyl-4-aminocyclohexyl)méthane (BMACM), et 2-2-bis-(3-méthyl-4-aminocyclohexyl)-propane (BMACP), et para-amino-di-cyclo-hexyl-méthane (PACM), et l'isophoronediamine (IPDA), la 2,6-bis-(aminométhyl)-norbomane (BAMN) et la pipérazine (Pip).

Avantageusement, on a des blocs PA4.12, PA4.14, PA4.18, PA6.10, PA6.12, PA6.14, PA6.18, PA9.12, PA10.10, PA10.12, PA10.14 et PA10.18.

Selon un deuxième type, les blocs polyamides résultent de la condensation d'un ou plusieurs acides alpha oméga aminocarboxyliques et/ou d'un ou plusieurs lactames ayant de 6 à 12 atomes de carbone en présence d'un diacide carboxylique ayant de 4 à 12 atomes de carbone ou d'une diamine.

A titre d'exemples de lactames, on peut citer le caprolactame, l'oenantholactame et le lauryllactame.

A titre d'exemples d'acide alpha omega amino carboxylique, on peut citer les acides aminocaproïque, amino-7-heptanoïque, amino-11-undécanoïque et amino-12-dodécanoïque.

Avantageusement les blocs polyamides du deuxième type sont en polyamide 11, en polyamide 12 ou en polyamide 6.

Selon un troisième type, les blocs polyamides résultent de la condensation d'au moins un acide alpha oméga aminocarboxylique (ou un lactame), au moins une diamine et au moins un diacide carboxylique.

Dans ce cas, on prépare les blocs PA par polycondensation :
- de la ou des diamines aliphatiques linéaires ou aromatiques ayant X atomes de carbone ;
- du ou des diacides carboxyliques ayant Y atomes de carbone ; et
- du ou des comonomères {Z}, choisis parmi les lactames et les acides alpha-oméga aminocarboxyliques ayant Z atomes de carbone et les mélanges équimolaires d'au moins une diamine ayant X1 atomes de carbone et d'au moins un diacide carboxylique ayant Y1 atomes de carbones, (X1, Y1) étant différent de (X, Y),
- ledit ou lesdits comonomères {Z} étant introduits dans une proportion pondérale allant jusqu'à 50%, de préférence jusqu'à 20%, encore plus avantageusement jusqu'à 10% par rapport à l'ensemble des monomères précurseurs de polyamide ;
- en présence d'un limiteur de chaîne choisi parmi les diacides carboxyliques ;

Avantageusement, on utilise comme limiteur de chaîne le diacide carboxylique ayant Y atomes de carbone, que l'on introduit en excès par rapport à la stoechiométrie de la ou des diamines.

Selon une variante de ce troisième type les blocs polyamides résultent de la condensation d'au moins deux acides alpha oméga aminocarboxyliques ou d'au moins deux lactames ayant de 6 à 12 atomes de carbone ou d'un lactame et d'un acide aminocarboxylique n'ayant pas le même nombre d'atomes de carbone en présence éventuelle d'un limiteur de chaîne.

A titre d'exemple d'acide alpha omega amino carboxylique aliphatique, on peut citer les acides aminocaproïques, amino-7-heptanoïque, amino-11-undécanoïque et amino-12-dodécanoïque.

A titre d'exemple de lactame, on peut citer le caprolactame, l'oenantholactame et le lauryllactame.

A titre d'exemple de diamines aliphatiques, on peut citer l'hexaméthylènediamine, la dodécaméthylènediamine et la triméthylhexaméthylène diamine.

A titre d'exemple de diacides cycloaliphatiques, on peut citer l'acide 1,4-cyclohexyldicarboxylique.

A titre d'exemple de diacides aliphatiques, on peut citer les acides butane-dioïque, adipique, azélaïque, subérique, sébacique, dodécanedicarboxylique, les acides gras dimérisés (ces acides gras dimérisés ont de préférence une teneur en dimère d'au moins 98%; de préférence ils sont hydrogénés; ils sont commercialisés sous la marque "PRIPOL" par la société "UNICHEMA", ou sous la marque EMPOL par la société HENKEL) et les Polyoxyalkylènes - a,w diacides.

A titre d'exemple de diacides aromatiques, on peut citer les acides téréphtalique (T) et isophtalique (I).

A titre d'exemple de diamines cycloaliphatiques, on peut citer les isomères des bis-(4-aminocyclohexyl)-méthane (BACM), bis-(3-méthyl-4-aminocyclohexyl)méthane (BMACM), et 2-2-bis-(3-méthyl-4-aminocyclohexyl)-propane(BMACP), et para-amino-di-cyclo-hexyl-méthane (PACM). Les autres diamines couramment utilisées peuvent être l'isophoronediamine (IPDA), la 2,6-bis-(aminométhyl)-norbornane (BAMN) et la pipérazine.

A titre d'exemples de blocs polyamides du troisième type, on peut citer les suivantes :
6.6 /6 dans laquelle 6.6 désigne des motifs hexaméthylènediamine condensée avec l'acide adipique. 6 désigne des motifs résultant de la condensation du caprolactame.
6.6/Pip.10/12 dans laquelle 6.6 désigne des motifs hexaméthylènediamine condensée avec l'acide adipique. Pip.10 désigne des motifs résultant de la condensation de la pipérazine et de l'acide sébacique. 12 désigne des motifs résultant de la condensation du lauryllactame.

Les proportions en poids sont respectivement 25 à 35 / 20 à 30 / 20 à 30 / le total étant 80 et avantageusement 30 à 35 / 22 à 27 / 22 à 27 / le total étant 80. Par exemple, les proportions 32 / 24 / 24 / conduisent à une température de fusion de 122 à 137°C.

6.6/6.10/11/12 dans laquelle 6.6 désigne l'hexaméthylènediamine condensée avec l'acide adipique. 6.10 désigne l'hexaméthylènediamine condensée avec l'acide sébacique. 11 désigne des motifs résultant de la condensation de l'acide aminoundécanoïque. 12 désigne des motifs résultant de la condensation du lauryllactame.

Les proportions en poids sont respectivement 10 à 20 / 15 à 25 / 10 à 20 / 15 à 25 le total étant 70 et avantageusement 12 à 16 /18 à 25 / 12 à 16 /18 à 25 le total étant 70.

Par exemple les proportions 14 / 21 / 14 / 21 /conduisent à une température de fusion de 119 à 131°C.

Les blocs polyéthers peuvent représenter 5 à 85 % en poids du copolymère à blocs polyamides et polyéthers. La masse Mn des blocs polyéther est comprise entre 100 et 6 000 g/mole et de préférence entre 200 et 3 000 g/mole.

Les blocs polyéthers sont constitués de motifs oxyde d'alkylène. Ces motifs peuvent être par exemple des motifs oxyde d'éthylène, des motifs oxyde de propylène ou tétrahydrofurane (qui conduit aux enchaînements polytétraméthylène glycol). On utilise ainsi des blocs PEG (polyethylène glycol) c'est à dire ceux constitués de motifs oxyde d'éthylène, des blocs PPG (propylène glycol) c'est à dire ceux constitués de motifs oxyde de propylène, des blocs PO3G (polytriméthylène glycol) c'est à dire ceux constitués de motifs polytriméthylène ether de glycol (De tels copolymères avec des blocs polytriméthylene ether sont décrits dans le brevet US 6590065), et des blocs PTMG c'est à dire ceux constitués de motifs tetraméthylène glycols appelés aussi polytétrahydrofurane. On utilise avantageusement des blocs PEG ou des blocs obtenus par oxyéthylation de bisphenols, tels que par exemple le bisphenol A. Ces derniers produits sont décrits dans le brevet EP 613 919.

Les blocs polyéthers peuvent aussi être constitués d'amines primaires éthoxylées. On utilise avantageusement aussi ces blocs. A titre d'exemple d'amines primaires éthoxylées on peut citer les produits de formule : 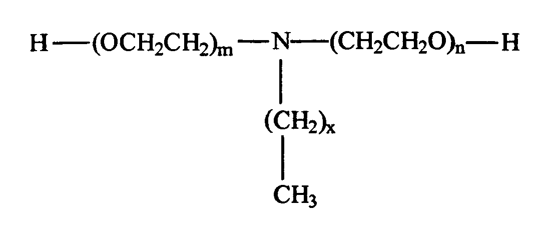 dans laquelle m et n sont compris entre 1 et 20 et x entre 8 et 18. Ces produits sont disponibles dans le commerce sous la marque NORAMOX® de la société CECA et sous la marque GENAMIN® de la société CLARIANT.

Les motifs éthers (A2) sont, par exemple, issus d'au moins un polyalkylène éther polyol, notamment un polyalkylène éther diol, de préférence choisi parmi le polyéthylène glycol (PEG), le polypropylène glycol (PPG), le polytriméthylène glycol (PO3G), le polytétraméthylène glycol (PTMG) et leurs mélanges ou leurs copolymères.

Les blocs souples polyéthers peuvent comprendre des blocs polyoxyalkylène à bouts de chaînes NH2, de telles blocs pouvant être obtenues par cyanoacétylation de blocs polyoxyalkylène alpha-oméga dihydroxylés aliphatiques appelées polyétherdiols. Plus particulièrement, on pourra utiliser les Jeffamines (Par exemple Jeffamine® D400, D2000, ED 2003, XTJ 542, produits commerciaux de la société Huntsman. Voir également brevets JP 2004346274, JP 2004352794 et EP1482011).

Les blocs polyétherdiols sont soit utilisés tels quels et copolycondensés avec des blocs polyamides à extrémités carboxyliques, soit ils sont aminés pour être transformés en polyéther diamines et condensés avec des blocs polyamides à extrémités carboxyliques. Ils peuvent être aussi mélangés avec des précurseurs de polyamide et un limiteur de chaîne diacide pour faire les polymères à blocs polyamides et blocs polyéthers ayant des motifs répartis de façon statistique.

Ces polymères peuvent être préparés par la réaction simultanée des blocs polyéthers et des précurseurs des blocs polyamides de préférence, on conduit la polycondensation à une température de 180 à 300°C. Par exemple, on peut faire réagir du polyétherdiol, des précurseurs de polyamide et un diacide limiteur de chaîne. On obtient un polymère ayant essentiellement des blocs polyéthers, des blocs polyamides de longueur très variable, mais aussi les différents réactifs ayant réagi de façon aléatoire qui sont répartis de façon aléatoire (statistique) le long de la chaîne polymère.

On peut aussi faire réagir du polyétherdiamine, des précurseurs de polyamide et un diacide limiteur de chaîne. On obtient un polymère ayant essentiellement des blocs polyéthers, des blocs polyamides de longueur très variable, mais aussi les différents réactifs ayant réagi de façon aléatoire qui sont répartis de façon aléatoire (statistique) le long de la chaîne polymère.

Mais ils peuvent être aussi préparés avantageusement par la réaction de condensation des blocs polyéthers avec les blocs polyamides.

Le catalyseur est défini comme étant tout produit permettant de faciliter la liaison des blocs polyamide et des blocs polyéther par estérification ou par amidification. Le catalyseur d'estérification est avantageusement un dérivé d'un métal choisi dans le groupe formé par le titane, le zirconium et l'hafnium ou encore un acide fort tel que l'acide phosphorique ou l'acide borique. Des exemples de catalyseurs sont ceux décrits dans les brevets US 4 331 786, US 4 115 475, US 4 195 015, US 4 839 441, US 4 864 014, US 4 230 838 et US 4 332 920.

La méthode générale de préparation en deux étapes des copolymères PEBA ayant des liaisons ester entre les blocs PA et les blocs PE est connue et est décrite, par exemple, dans le brevet français FR 2 846 332. La méthode générale de préparation des copolymères PEBA de l'invention ayant des liaisons amide entre les blocs PA et les blocs PE est connue et décrite, par exemple dans le brevet européen EP 1 482 011.

La réaction de formation du bloc PA se fait habituellement entre 180 et 300°C, de préférence de 200 à 290°C, la pression dans le réacteur s'établit entre 5 et 30 bars, et on la maintient environ 2 à 3 heures. On réduit lentement la pression en mettant le réacteur à la pression atmosphérique, puis on distille l'eau excédentaire par exemple pendant une heure ou deux.

Le polyamide à extrémités acide carboxylique ayant été préparé, on ajoute ensuite le polyéther et un catalyseur. On peut ajouter le polyéther en une ou plusieurs fois, de même pour le catalyseur. Selon une forme avantageuse, on ajoute d'abord le polyéther, la réaction des extrémités OH du polyéther et des extrémités COOH du polyamide commence avec formation de liaisons ester et élimination d'eau. On élimine le plus possible l'eau du milieu réactionnel par distillation, puis on introduit le catalyseur pour achever la liaison des blocs polyamides et des blocs polyéthers. Cette deuxième étape s'effectue sous agitation, de préférence sous un vide d'au moins 6 mm Hg (800 Pa) à une température telle que les réactifs et les copolymères obtenus soient à l'état fondu. A titre d'exemple, cette température peut être comprise entre 100 et 400°C et le plus souvent 200 et 300°C. La réaction est suivie par la mesure du couple de torsion exercée par le polymère fondu sur l'agitateur ou par la mesure de la puissance électrique consommée par l'agitateur. La fin de la réaction est déterminée par la valeur du couple ou de la puissance cible.

On pourra également ajouter pendant la synthèse, au moment jugé le plus opportun, une ou plusieurs molécules utilisées comme anti-oxydant, par exemple l'Irganox® 1010 ou l'Irganox® 245.

S'agissant de la préparation des copolymères à blocs polyamides et blocs polyéther, ils peuvent être préparés par tout moyen permettant d'accrocher les blocs polyamide et les blocs polyéther. En pratique, on utilise essentiellement deux procédés l'un dit en 2 étapes, l'autre en une étape.

Dans le procédé en deux étapes, on fabrique d'abord les blocs polyamides puis dans une deuxième étape on accroche les blocs polyamides et les blocs polyéthers. Dans le procédé en une étape on mélange les précurseurs de polyamide, le limiteur de chaînes et le polyéther; on obtient alors un polymère ayant essentiellement des blocs polyéthers, des blocs polyamides de longueur très variable, mais aussi les différents réactifs ayant réagi de façon aléatoire qui sont répartis de façon aléatoire (statistique) le long de la chaîne polymère. Que ce soit en une ou deux étapes il est avantageux d'opérer en présence d'un catalyseur. On peut utiliser les catalyseurs décrits dans les brevets US 4 331 786, US 4115 475, US 4 195 015, US 4 839 441, US 4 864 014, US 4 230 838 et US 4 332 920, WO 04 037898, EP 1262527, EP 1270211, EP 1136512, EP 1046675, EP 1057870, EP 1155065, EP 506495 et EP 504058. Dans le procédé en une étape on fabrique aussi des blocs polyamide, c'est pourquoi on a écrit au début de ce paragraphe que ces copolymères pouvaient être préparés par tout moyen d'accrocher les blocs polyamides (bloc PA) et les blocs polyéthers (bloc PE).

Avantageusement, les copolymères PEBA ont des blocs PA en PA 6, en PA 11, en PA 12, PA 6.12, en PA 6.6/6, en PA 10.10 et en PA 6.14 et des blocs PE en PTMG, en PPG, en PO3G et en PEG.
(d) S'agissant des polyamides : Ce sont des homopolyamides ou des copolyamides.

Selon un premier type, les polyamides proviennent de la condensation d'un diacide carboxylique, en particulier ceux ayant de 4 à 20 atomes de carbone, de préférence ceux ayant de 6 à 18 atomes de carbone et d'une diamine aliphatique ou aromatique, en particulier celles ayant de 2 à 20 atomes de carbone, de préférence celles ayant de 6 à 14 atomes de carbone.

A titre d'exemples d'acides dicarboxyliques, on peut citer l'acide 1;4-cyclohexyldicarboxylique, les acides butanedioïque, adipique, azélaïque, subérique, sébacique, dodécanedicarboxylique, octadécanedicarboxylique et les acides téréphtalique et isophtalique, mais aussi les acides gras dimérisés.

A titre d'exemples de diamines, on peut citer la tétraméthylène diamine, l'hexaméthylènediamine, la 1,10-décaméthylènediamine, la dodécaméthylènediamine, la triméthylhexaméthylène diamine, les isomères des bis-(4-aminocyclohexyl)-méthane (BACM), bis-(3-méthyl-4-aminocyclohexyl)méthane (BMACM), et 2-2-bis-(3-méthyl-4-aminocyclohexyl)-propane (BMACP), et para-amino-di-cyclo-hexyl-méthane (PACM), et l'isophoronediamine (IPDA), la 2,6-bis-(aminométhyl)-norbornane (BAMN) et la pipérazine (Pip).

Avantageusement, on a des PA 4.12, PA 4.14, PA 4.18, PA 6.10, PA 6.12, PA 6.14, PA 6.18, PA 9.12, PA 10.10, PA 10.12, PA 10.14 et PA 10.18.

Selon un deuxième type, les polyamides résultent de la condensation d'un ou plusieurs acides alpha oméga aminocarboxyliques et/ou d'un ou plusieurs lactames ayant de 6 à 12 atomes de carbone en présence d'un diacide carboxylique ayant de 4 à 12 atomes de carbone ou d'une diamine.

A titre d'exemples de lactames, on peut citer le caprolactame, l'oenantholactame et le lauryllactame.

A titre d'exemples d'acide alpha omega amino carboxylique, on peut citer les acides aminocaproïque, amino-7-heptanoïque, amino-11-undécanoïque et amino-12-dodécanoïque.

Avantageusement les polyamides du deuxième type sont en polyamide 11, en polyamide 12 ou en polyamide 6.

Selon un troisième type, les polyamides résultent de la condensation d'au moins un acide alpha oméga aminocarboxylique (ou un lactame), au moins une diamine et au moins un diacide carboxylique.

Dans ce cas, on prépare, lors d'une première étape, les blocs polyamide PA par polycondensation :
- de la ou des diamines aliphatiques linéaires ou aromatiques ayant X atomes de carbone ;
- du ou des diacides carboxyliques ayant Y atomes de carbone ; et
- du ou des comonomères {Z}, choisis parmi les lactames et les acides alpha-oméga aminocarboxyliques ayant Z atomes de carbone et les mélanges équimolaires d'au moins une diamine ayant X1 atomes de carbone et d'au moins un diacide carboxylique ayant Y1 atomes de carbones, (X1, Y1) étant différent de (X, Y),
- ledit ou lesdits comonomères {Z} étant introduits dans une proportion pondérale allant jusqu'à 50%, de préférence jusqu'à 20%, encore plus avantageusement jusqu'à 10% par rapport à l'ensemble des monomères précurseurs de polyamide ;

A titre d'exemple d'acide alpha omega amino carboxylique aliphatique, on peut citer les acides aminocaproïques, amino-7-heptanoïque, amino-11-undécanoïque et amino-12-dodécanoïque.

A titre d'exemple de lactame, on peut citer le caprolactame, l'oenantholactame et le lauryllactame.

A titre d'exemple de diamines aliphatiques, on peut citer l'hexaméthylènediamine, la dodécaméthylènediamine et la triméthylhexaméthylène diamine.

A titre d'exemple de diacides cycloaliphatiques, on peut citer l'acide 1,4-cyclohexyldicarboxylique.

A titre d'exemple de diacides aliphatiques, on peut citer les acides butane-dioïque, adipique, azélaïque, subérique, sébacique, dodécanedicarboxylique, les acides gras dimérisés (ces acides gras dimérisés ont de préférence une teneur en dimère d'au moins 98%; de préférence ils sont hydrogénés; ils sont commercialisés sous la marque "PRIPOL" par la société "UNICHEMA", ou sous la marque EMPOL par la société HENKEL) et les Polyoxyalkylènes - α,γ diacides.

A titre d'exemple de diacides aromatiques, on peut citer les acides téréphtalique (T) et isophtalique (I).

A titre d'exemple de diamines cycloaliphatiques, on peut citer les isomères des bis-(4-aminocyclohexyl)-méthane (BACM), bis-(3-méthyl-4-aminocyclohexyl)méthane (BMACM), et 2-2-bis-(3-méthyl-4-aminocyclohexyl)-propane(BMACP), et para-amino-di-cyclo-hexyl-méthane (PACM). Les autres diamines couramment utilisées peuvent être l'isophoronediamine (IPDA), la 2,6-bis-(aminométhyl)-norbornane (BAMN) et la pipérazine.

A titre d'exemples de polyamides du troisième type, on peut citer les suivants :
- PA6.6/6 dans laquelle 6.6 désigne des motifs hexaméthylènediamine condensée avec l'acide adipique. 6 désigne des motifs résultant de la condensation du caprolactame.
- PA6.6/Pip.10/12 dans laquelle 6.6 désigne des motifs hexaméthylènediamine condensée avec l'acide adipique. Pip. 10 désigne des motifs résultant de la condensation de la pipérazine et de l'acide sébacique. 12 désigne des motifs résultant de la condensation du lauryllactame. Les proportions en poids sont respectivement 25 à 35 / 20 à 30 / 20 à 30 / le total étant 80 et avantageusement 30 à 35 / 22 à 27 / 22 à 27 / le total étant 80. Par exemple, les proportions 32 / 24 / 24 / conduisent à une température de fusion de 122 à 137°C.
- PA6.6/6.10/11/12 dans laquelle 6.6 désigne l'hexaméthylènediamine condensée avec l'acide adipique. 6.10 désigne l'hexaméthylènediamine condensée avec l'acide sébacique. 11 désigne des motifs résultant de la condensation de l'acide aminoundécanoïque. 12 désigne des motifs résultant de la condensation du lauryllactame. Les proportions en poids sont respectivement 10 à 20 / 15 à 25 / 10 à 20 / 15 à 25 le total étant 70 et avantageusement 12 à 16 / 18 à 25 / 12 à 16 / 18 à 25 le total étant 70. Par exemple les proportions 14 / 21 / 14 / 21 / conduisent à une température de fusion de 119°C à 131°C.

Le substrat S1 est choisi parmi les (TPE-PA) définis précédemment et/ou leurs mélanges.

Bien entendu, le substrat S1 peut comprendre en outre des additifs tels des catalyseurs, notamment ceux à base de phosphore, des stabilisants aux UV, des colorants, des agents de nucléation, des plastifiants, des agents améliorant la résistance aux chocs, des anti-oxydants, des agents démoulants, des adjuvants ou auxiliaires de traitement ou de mise en oeuvre, notamment des stéarates, tels que du stéarate de calcium, du stéarate de zinc et du stéarate de magnésium, des acides gras, des alcools gras, des esters de type ester montanique, des esters d'acide sébacique, des esters d'acide dodécanedioïque, des cires de polyoléfines, des cires amides, des stéaramides tels que l'éthylène bis stéaramide (EBS), des érucamides, des additifs fluorés, notamment de type Dyneon Dynamer FX 5914 ou FX 5911.

De manière avantageuse, ledit substrat TPE/PA comprend au moins un polymère amorphe ou quasi amorphe, c'est à dire un promoteur d'adhérence (A) tel que décrit dans la demande de brevet française n°: 07.58478 de la demanderesse.

Ce polymère promoteur d'adhérence est majoritairement amorphe. Il est avantageusement choisi parmi les composés amorphes ou quasi amorphes de la famille des TPE précédemment décrits et/ou parmi les polyamides amorphes ou quasi-amorphes. Il peut avantageusement comprendre un mélange de ces deux types de composés (TPE ou PA) amorphes ou quasi amorphes.

Ledit au moins un TPE amorphe ou quasi amorphe est préférentiellement choisi parmi : les COPE amorphes ou quasi amorphes et/ou les TPU amorphes ou quasi amorphes et/ou les PEBA amorphes ou quasi amorphes.

Avantageusement, le matériau à base de TPE qui forme le substrat S1 à une teneur en polymère TPE amorphe ou quasi amorphe et/ou en polyamide amorphe ou quasi amorphe qui représente de 1 à 99% en poids du poids total dudit matériau. De préférence cette teneur représente de 3 à 90% en poids du poids total dudit matériau. De préférence encore, cette teneur représente de 5 à 70 % en poids du poids total dudit matériau.

De préférence, les promoteurs d'adhérence à base de polyamide (PA) amorphe ou quasi-amorphe et/ou à base de Polyéther-bloc-amide (PEBA) amorphe ou quasi-amorphe sont utilisés.

Selon encore un mode de réalisation préféré de l'invention, le matériau du substrat S1 est à base de PEBA et comprend en outre un polymère promoteur d'adhérence (A) à base de PA amorphe ou quasi-amorphe et/ ou de PEBA amorphe ou quasi-amorphe.

S'agissant des PA amorphes ou quasi amorphes :
Selon un mode de réalisation de l'invention, les polyamides de motifs A1 entrant dans la composition du promoteur d'adhérence (A) présentent une cristallinité telle que l'enthalpie de fusion lors de la deuxième chauffe d'une DSC ISO (delta Hm(2)) soit inférieure ou égale à 10 J/g, la masse étant rapportée à la quantité de motifs amides contenus ou de polyamide contenu, cette fusion étant celle des motifs amides ; il peut enfin avoir une cristallinité (dite intermédiaire) telle que l'enthalpie de fusion lors de la deuxième chauffe d'une DSC ISO (delta Hm(2)) soit comprise entre 10 et 30 J/g, préférentiellement entre 10 et 25 J/g, la masse étant rapportée à la quantité de motifs amides contenus ou de polyamide contenu, cette fusion étant celle des motifs amides. De tels matériaux sont des produits au comportement intermédiaire entre des polymères amorphes ou essentiellement amorphes, c'est-à-dire avec une enthalpie de fusion à la deuxième chauffe entre 0 et 10 J/g, qui ne sont plus à l'état solide au-dessus de leur Tg, et des polymères véritablement semi-cristallins, qui sont des polymères qui demeurent à l'état solide, donc qui conservent bien leur forme au-delà de leur Tg. Ces produits au comportement intermédiaire sont donc dans un état plus ou moins solide, mais aisément déformables au-delà de leur Tg.

Par delta Hm(2), on entend l'enthalpie de fusion lors de la deuxième chauffe d'une DSC selon la norme ISO, la DSC ("Differential Scanning Calorimetry") étant l'analyse calorimétrique différentielle.

Les polyamides peuvent être constitués majoritairement d'une association équimolaire d'au moins une diamine et d'au moins un diacide carboxylique ou aromatiques ou cycloaliphatiques, les diamines étant majoritairement cycloaliphatiques, les motifs amides pouvant éventuellement comprendre, au moins un autre comonomère de polyamide de type amino acide, lactame ou du type X ,Y (X= diamine aliphatique , Y =diacide aliphatique).

La ou les diamines cycloaliphatiques peuvent être avantageusement choisies parmi le bis-(3-méthyl-4-aminocyclohexyl)-méthane (BMACM), le para-aminodicyclohexyl méthane (PACM), l'isophoronediamine (IPD), le bis(4-aminocyclohexyl)-méthane (BACM), le 2,2-bis(3-méthyl-4-aminocyclohexyl)propane (BMACP), la 2,6-bis(aminométhyl)norbornane (BAMN).

Une diamine non cycloaliphatique peut entrer dans la composition des monomères des motifs amides (A1). Comme diamine non cycloaliphatique, on peut citer les diamines aliphatiques linéaires, telles que la 1,4-tétraméthylène diamine, la 1,6-hexaméthylènediamine, la 1,9-nonaméthylènediamine et la 1,10-décaméthylènediamine.

Le ou les diacides carboxyliques aliphatiques peuvent être choisis parmi les diacides carboxyliques aliphatiques ayant de 6 à 36 atomes de carbone, de préférence de 9 à 18 atomes de carbone, en particulier l'acide 1,10-décanedicarboxylique (acide sébacique), l'acide 1,12-dodécanedicarboxylique, l'acide 1,14-tétradécanedicarboxylique et l'acide 1,18-octadécanedicarboxylique.

Un diacide carboxylique aromatique ou cycloaliphatique peut entrer dans la composition des monomères des motifs amides. Dans ce cas, le diacide carboxylique est choisi parmi les diacides aromatiques, en particulier l'acide isophtalique (I), l'acide téréphtalique (T) et leurs mélanges.

L'acide alpha-oméga aminocarboxylique ou amino acide est, par exemple, choisi parmi l'acide aminocaproïque, l'acide amino-7-heptanoïque, l'acide amino-11-undécanoïque ou l'acide amino-12-dodécanoïque.

Les blocs polyamides sont, par exemple, choisis parmi BMACM.6, BMACM.9, BMACM.10, BMACM.12, BMACM.14, BMACM.16, BMACM.18 et leurs mélanges.

La masse moléculaire en nombre des blocs polyamides est avantageusement comprise entre 500 et 12000 g/mole, de préférence entre 2000 et 6000 g/mole.

S'agissant des PEBA amorphes ou quasi amorphes:
Selon un deuxième mode de réalisation de l'invention, un copolymère promoteur d'adhérence (A) comprend des motifs polyamides (A1) et des motifs blocs éthers (A2) et peut se présenter sous forme de blocs polyamide-polyéther.

Les motifs polyamide (A1) amorphes ou quasi amorphes sont ceux déjà décrits dans le paragraphe précédent (Cf. PA amorphe ou quasi amorphe).

Les motifs blocs polyether (A2) sont, par exemple, issus d'au moins un polyalkylène éther polyol, notamment un polyalkylène éther diol, de préférence choisi parmi le polyéthylène glycol (PEG), le polypropylène glycol (PPG), le polytriméthylène glycol (PO3G), le polytétraméthylène glycol (PTMG) et leurs mélanges ou leurs copolymères.

Les blocs souples polyéthers peuvent comprendre des séquences polyoxyalkylène à bouts de chaînes NH2, de telles séquences pouvant être obtenues par cyanoacétylation de séquences polyoxyalkylène alpha-oméga dihydroxylés aliphatiques appelées polyétherdiols. Plus particulièrement, on pourra utiliser les Jeffamines (Par exemple Jeffamine® D400, D2000, ED 2003, XTJ 542, produits commerciaux de la société Huntsman. Voir également brevets JP 2004346274, JP 2004352794 et EP1482011).

La masse moléculaire moyenne en nombre des blocs polyéthers est avantageusement comprise entre 200 et 4000 g/mole, de préférence entre 300 et 1100 g/mole.

Le copolymère promoteur d'adhérence (A) peut être préparé par le procédé suivant lequel :
- dans une première étape, on prépare les blocs polyamide PA par polycondensation
   o de la ou des diamines ;
   o du ou des diacides carboxyliques ; et
   le cas échéant, du ou des comonomères choisis parmi les lactames et les acides alpha-oméga aminocarboxyliques ;
   o en présence d'un limiteur de chaîne choisi parmi les diacides carboxyliques ; puis
- dans une seconde étape, on fait réagir les blocs polyamide PA obtenus avec des blocs polyéther PE, en présence d'un catalyseur.

La méthode générale de préparation en deux étapes des copolymères de l'invention est connue et est décrite, par exemple, dans le brevet français FR 2 846 332 et dans le brevet européen EP 1 482 011.

La réaction de formation du bloc PA se fait habituellement entre 180 et 300°C, de préférence de 200 à 290°C, la pression dans le réacteur s'établit entre 5 et 30 bars, et on la maintient environ 2 à 3 heures. On réduit lentement la pression en mettant le réacteur à la pression atmosphérique, puis on distille l'eau excédentaire par exemple pendant une heure ou deux.

Le polyamide à extrémités acide carboxylique ayant été préparé, on ajoute ensuite le polyéther et un catalyseur. On peut ajouter le polyéther en une ou plusieurs fois, de même pour le catalyseur. Selon une forme avantageuse, on ajoute d'abord le polyéther, la réaction des extrémités OH du polyéther et des extrémités COOH du polyamide commence avec formation de liaisons ester et élimination d'eau. On élimine le plus possible l'eau du milieu réactionnel par distillation, puis on introduit le catalyseur pour achever la liaison des blocs polyamides et des blocs polyéthers. Cette deuxième étape s'effectue sous agitation, de préférence sous un vide d'au moins 15 mm Hg (2000 Pa) à une température telle que les réactifs et les copolymères obtenus soient à l'état fondu. A titre d'exemple, cette température peut être comprise entre 100 et 400°C et le plus souvent 200 et 300°C. La réaction est suivie par la mesure du couple de torsion exercée par le polymère fondu sur l'agitateur ou par la mesure de la puissance électrique consommée par l'agitateur. La fin de la réaction est déterminée par la valeur du couple ou de la puissance cible.

On pourra également ajouter pendant la synthèse, au moment jugé le plus opportun, une ou plusieurs molécules utilisées comme anti-oxydant, par exemple l'Irganox® 1010 ou l'Irganox® 245.

On peut aussi considérer le procédé de préparation du copolymère (A) tel que l'on ajoute tous les monomères au début, soit en une seule étape, pour effectuer la polycondensation :
- de la ou des diamines ;
- du ou des diacides carboxyliques ; et
- le cas échéant, de l'autre ou des autres comonomères de polyamide ;
- en présence d'un limiteur de chaîne choisi parmi les diacides carboxyliques ;
- en présence des blocs PE (polyéther) ;
- en présence d'un catalyseur pour la réaction entre les blocs souples PE et les blocs PA.

Avantageusement, on utilise comme limiteur de chaîne ledit diacide carboxylique, que l'on introduit en excès par rapport à la stoechiométrie de la ou des diamines.

Avantageusement, on utilise comme catalyseur, un dérivé d'un métal choisi dans le groupe formé par le titane, le zirconium et l'hafnium ou un acide fort tel que l'acide phosphorique, l'acide hypophosphoreux ou l'acide borique.

On peut conduire la polycondensation à une température de 240 à 280°C.

S'agissant du procédé d'incorporation du promoteur d'adhésion dans la composition du substrat S1:
Le promoteur d'adhérence (A) peut être introduit dans la composition du substrat S1 par une opération de compoundage ou à l'aide d'un mélange maître (« masterbatch ») contenant le polymère promoteur d'adhérence ou lors de la polycondensation du TPE ou par incorporation par mélange à sec avec le matériau à base de TPE, lors de la transformation des parties moulées par injection. Le promoteur d'adhérence peut encore être incorporé en surface de la partie du substrat à coller via une opération de surmoulage.

Avantageusement, l'incorporation du promoteur d'adhésion selon l'invention n'altère pas les propriétés mécaniques intrinsèques de la matrice du substrat S1, et ceci quel que soit le procédé d'incorporation du promoteur dans la matrice du substrat.

### 2- Substrat S2

Le substrat S2 peut être identique ou différent du substrat S1.

Le substrat S2 est choisi parmi les substrats TPE/PA définis précédemment et/ou leur(s) mélange(s), les homopolymères et les copolymères tels que les polyoléfines, les polyamines, les polyamides, les polyesters, les polyéthers, les polyesteréthers, les polyimides, les polycarbonates, les résines phénoliques, les polyuréthanes réticulés ou non, notamment les mousses, les poly (éthylène acétate de vinyle), les élastomères naturels ou synthétiques tels que les polybutadiènes, les polyisoprènes, les styrène-butadiène-styrène (SBS), les styrène-butadiène-acrylonitrile (SBN), les polyacrylonitriles, les tissus naturels ou synthétiques, notamment les tissus en fibres polymères organiques tels que les tissus en fibres de polypropylène, polyéthylène, polyesters, alcool polyvinylique, polyacétate de vinyle, polychlorure de vinyle, polyamide, les tissus en fibres de verre ou en fibres de carbone, ainsi que les matériaux comme le cuir, le papier et le carton.

### 3- Solutions de nettoyage

Les solutions de nettoyage de la surface des substrats à coller sont celles généralement utilisées pour éliminer les impuretés, graisses, agents étrangers qui pourraient altérer l'adhésion des primaires et/ou des colles sur les substrats.

Ces solutions de nettoyage peuvent également contenir des additifs tels que des agents mouillants ou des détergents pour favoriser l'élimination de produits polluants et/ ou pour améliorer la mouillabilité des supports.

On peut citer par exemple les solutions de nettoyage à base d'eau, à base de solvants organiques aliphatiques ou à base de solvants aromatiques et leurs mélanges composés de 2 ou plusieurs des 3 solvants précédents.

Les principaux groupes de solvants sont :
- L'eau
- Les cétones(ex : Acétone, méthyléthylcétone).
- Les alcools(ex : méthanol, éthanol, isopropanol, glycols).
- Les Esters( ex : acétates, agrosolvants).
- Les Ethers(ex : Ethers éthyliques, THF, dioxane)
- Les Ethers de glycol.
- Les Hydrocarbures aromatiques (benzène, toluène, xylène, cumène).
- Les Solvants pétroliers (hors aromatiques :alcanes, alcènes).
- Les Hydrocarbures halogénés : (chlorés bromés ou fluorés).
- Solvants particuliers (amines, amides, terpènes).

Les solvants organiques ou les solutions à base d'eau et/ou à base de solvants organiques seront judicieusement choisis de manière à réduire au maximum les émissions de solvants, et à réduire les risques liés à la toxicité et à l'écotoxicité. De manière avantageuse on choisira la méthyléthylcétone (MEK) comme solvant de nettoyage du type organique ou bien une solution détergente à base aqueuse (dispersion ou émulsion).

Concernant le procédé de nettoyage, celui-ci peut être fait selon des techniques couramment utilisées dans le domaine, telles que : l'application au pinceau, la pulvérisation, le trempage, etc. La technique préférée pour le nettoyage d'un substrat (TPE-PA) est le trempage car il assure une homogénéité de l'effet promoteur d'adhérence de surface par l'activateur ainsi qu'un niveau de collage uniforme. Le nettoyage par trempage permet d'éviter plus facilement la contamination du substrat par d'éventuelles impuretés. De plus la technique du trempage est parfaitement adaptée aux procédés de collage en continu sur ligne d'assemblage. De manière alternative, le nettoyage au pinceau ou à l'aide d'un textile peut être utilisé, mais il génère des déchets souillés.

On effectue ensuite un « séchage » de la surface nettoyée à température comprise dans la gamme allant de 50°C à 140°C, afin de pouvoir appliquer directement sur la surface nettoyée, le joint de colle, ce joint de colle pouvant comprendre par exemple une première couche de primaire, et une couche de colle appliquée sur cette première couche de primaire.

### 4- joint de colle (J)

D'une manière générale, les substrats (S1) à base de (TPE-PA) sont assemblés par collage avec d'autres substrats (S2) au moyen d'un joint de colle. Le joint de colle peut être appliqué en une ou plusieurs couches de colle(s) de compositions différentes ou non sur au moins une des surfaces des substrats à coller. Le joint de colle peut comprendre en outre une première couche de primaire, appliquée sur un substrat avant l'application de couche(s) de colle, pour améliorer le mouillage de la surface du substrat avec la colle. La colle et le primaire peuvent avoir des compositions plus ou moins proches, le primaire ayant le plus souvent une viscosité inférieure à celle de la colle. Un des avantages de l'invention est qu'à la fois le(s) primaire(s) d'adhérence et/ou la(les) colle(s) utilisés sont majoritairement aqueux.
- S'agissant des colles appliquées sur le(s) substrat(s) à base de (TPE-PA) :
   Les colles employées peuvent être monocomposant, contenant par exemple un polymère (fonctionalisé ou non) et un réticulant dans une même dispersion dans l'eau. Les colles peuvent également être pluricomposant. Ce sont le plus souvent des colles bicomposant comprenant un premier composant qui peut être une résine fonctionnalisée (par exemple hydroxylée, carboxylée, époxy, amine, amide...) ou non, en dispersion ou en solution dans un solvant organique et/ou dans l'eau et un deuxième composant (réticulant), tel qu'une solution d'isocyanate dans un solvant organique ou
   encore un isocyanate pur ou en dispersion dans l'eau. Pour limiter l'émission de solvants, le procédé de collage selon l'invention utilise préférentiellement les solutions aqueuses.

Bien entendu, d'autres types de colle à base aqueuse peuvent être utilisés. Par exemple des colles « contact » peuvent être utilisées, agissant par fusion de deux couches en contact.
- S'agissant des primaires appliqués sur le(s) substrat(s) à base de (TPE-PA) :
   Les compositions de primaire utilisées dans la présente invention peuvent être monocomposant ou pluricomposant. Les primaires préférentiellement utilisés dans la présente invention sont généralement des compositions bicomposant dont le premier composant est une résine (fonctionnalisée ou non) en solution dans un solvant organique ou dans un solvant aqueux ou en dispersion dans un solvant aqueux et le deuxième composant (réticulant), qui est ajouté au premier composant juste avant utilisation du primaire, est un isocyanate ou mélange d'isocyanates également en solution dans un solvant organique ou dans un solvant aqueux ou en dispersion dans un solvant aqueux.

Selon la composition en solvant de ces primaires, cette étape d'application du primaire implique donc plus ou moins d'émissions de solvants organiques dans l'atmosphère. Le procédé de collage selon l'invention préfère donc là aussi les solutions aqueuses. Bien entendu, tout autre agent de réticulation peut être utilisé, par exemple l'héxaméthoxymethylmélamine (HMMM) qui est approprié dans le cas des primaires à l'eau.

### 5- Promoteur d'adhérence

Ledit promoteur d'adhérence selon l'invention comporte au moins une molécule organique comprenant un ou plusieurs groupements (ou fonctions) isocyanates (I) hautement réactifs. Ladite molécule est encapsulée, ou du moins ses groupemens isocyanates hautement réactifs le sont.

Par molécules à groupements isocyanates hautement réactifs pouvant entrer dans la composition du promoteur d'adhérence selon l'invention, on entend tous diisocyanates et polyisocyanates solides à température ambiante, de point de fusion supérieur à 40°C, et disponible sous forme de poudre de taille moyenne de particule inférieure à 200 µm, de préférence inférieure à 100 µm. Lesdites molécules à groupements isocyanates de la présente invention peuvent être aliphatiques, cycloaliphatiques, hétérocycliques, ou aromatiques.

De préférence, les molécules à groupements isocyanates hautement réactifs de la présente invention sont des molécules aromatiques.

A titre d'exemples de molécules à fonctions isocyanates hautement réactives particulièrement appropriées pour entrer dans la composition du promoteur d'adhérence selon l'invention, on peut citer: 4,4'-méthylène di(phenylisocyanate) (=diphenylmethane-4,4'-diisocyanate, MDI), l'isophorone diisocyanate (IPDI), le 2,4-toluene diisocyanate (TDI), le toluylene diisocyanate-urethdione (=TDI-urethdione, TDI-U, dimeric 1-methyl-2,4-phenylene diisocyanate), TDI-uree, naphtalene-1,5-diisocyanate (NDI), 3,3'-dimethyl biphenyl-4,4'-diisocyanate (TODI) et l'isocyanurate de IPDI (IPDI-T) et leurs mélanges.

On utilise préférentiellement le 2,4-toluene diisocyanate (TDI), ou le trimère de l'isophorone diisocyanate (IPDI).

Lesdites molécules sont encapsulées par réaction des isocyanates avec des amines aliphatiques pour former des fonctions urée. Aussi, selon l'invention, on entend par molécules organiques à fonction(s) isocyanate(s) bloquée(s) par encapsulation, des particules solides très finement broyées comprenant des molécules à fonctions isocyanates (I) désactivées par des amines aliphatiques, qui créent ainsi une couche protectrice ou capsule comprenant des fonctions urée à la surface desdites particules solides.

A titre d'exemples d'amines aliphatiques formant un agent encapsulant des isocyanates décrits ci-dessus, on peut citer : la 2-pentaméthylène-1,5-diamine et ses isomères et homologues tels que, par exemple, la 1,6-hexaméthylène diamine, di-sec-butyl amine ; éthylène diamine; 1,3-propylène diamine; diéthylène triamine; triéthylène tétramine; 3,3'-diméthyl-4,4'-diaminodicyclohexyl méthane; méthylnonane diamine; isophorone diamine; 4,4'-diaminodicyclohexyl methane ; alkanol amine et diamine, telle que l'éthanolamine et diéthanolamine.

Parmi ces amines aliphatiques, on utilise de préférence la 2-pentaméthylène-1,5-diamine et ses isomères et homologues tels que, par exemple, la 1,6-hexaméthylène diamine.

Grâce à cette encapsulation, les groupements isocyanates sont désactivés, c'est à dire non réactifs avec d'autres molécules. Cette encapsulation empêche les fonctions isocyanates de réagir entre elles ou avec d'autres molécules, telles que l'eau, les résines (polyuréthanes), et autres molécules susceptibles de réagir avec les fonctions isocyanates.

Le promoteur d'adhérence selon l'invention comprenant de telles molécules peut être incorporé en dispersion aqueuse, et/ou mélangé avec des résines, notamment polyuréthanes, pour former une colle monocomposant.

Selon l'invention, le promoteur d'adhérence est incorporé de préférence dans le primaire aqueux et/ ou la colle aqueuse, qui est destiné(e) à se retrouver en contact avec le support TPE-A, à raison de 0.5 à 20% en masse de matière active et de préférence de 0.5 à 10% en masse de matière active, sur la masse totale de primaire et/ ou de colle.

Le promoteur d'adhérence est « activé » lors de l'opération de cuisson, aussi appelée séchage, du primaire ou de la colle à une température comprise entre 50 et 140°C et de préférence entre 70 et 120°C. Cette activation est réalisée directement après application du primaire ou de la colle sur le substrat, sans nécessiter d'étape d'évaporation d'eau intermédiaire, et elle précède l'accostage sous presse des substrats

Lors de l'activation thermique, la capsule protectrice comprenant les fonctions urée en surface s'ouvre et libére les fonctions isocyanates, ce qui leur permet de réagir à la fois avec les fonctions chimiques disponibles en surface des substrats (TPE-PA) et avec les éventuels autres composants des colles, jouant ainsi leur rôle de promoteur d'adhérence.

De telles molécules organiques à fonction(s) isocyanate(s) bloquée(s) par encapsulation sont disponibles à l'état solide ou en prédispersion. Dans ce dernier cas, des agents de dispersion, des agents mouillants ou des agents modificateurs de viscosité, peuvent être introduits pour assurer la stabilité des dispersions.

Ces molécules organiques à fonction(s) isocyanate(s) bloquée(s) par encapsulation sont commercialisées, par exemple, par la société Bayer Material Science sous la dénomination commerciale Dispercoll BL XP 2514 (TDI- Dimer désactivé) et Desmodur LP BUEJ 471 ou Desmodur Z XP 2589 (IPDI- Trimer désactivé).

Les polyisocyanates du type TDI encapsulés sont utilisés préférentiellement.

Le promoteur d'adhérence selon l'invention peut être utilisé seul ou en combinaison avec un (ou plusieurs) autre(s) isocyanate(s), bloqués ou non bloqués, encapsulé(s) ou non encapsulés, de manière à contrôler la réactivité et les propriétés physico-chimiques du joint de colle.

Le collage sur supports TPE/PA nécessite des colles de forte réactivité. Toutefois, les colles à base d'isocyanates très réactifs forment des couches très rigides, qui supportent difficilement les contraintes de déformations liées à la chaussure de sport

Selon un mode de réalisation préféré de la présente invention, on applique successivement sur la surface d'un substrat :
- une couche de primaire comprenant un promoteur d'adhérence à base d'isocyanate aromatique hautement réactif encapsulé ;
- une couche de colle bicomposant classique (à base d'isocyanate aliphatique non bloqué faiblement réactif).

Ainsi, après activation, le primaire forme une couche d'adhésion très réactive avec la surface du substrat. La couche de primaire étant cassante à la pliure, une très fine couche de primaire est suffisante.

La colle, grâce à sa grande affinité avec le primaire, assure le collage proprement dit. La couche de colle est quant à elle très flexible.

Selon un autre mode de réalisation, on mélange dans la composition du primaire et/ou de la colle des molécules à groupements isocyanates non bloqués avec des molécules à groupements isocyanates encapsulés du promoteur d'adhérence de l'invention. L'utilisation du promoteur selon l'invention dans des compositions de primaire et/ou de colle existantes (monocomposant ou pluricomposant) permet d'adapter le compromis entre adhérence sur substrats TPE/PA et souplesse des joints de colle et des stratifiés obtenu. Les isocyanates très réactifs encapsulés assurent l'adhérence sur matériau TPE/PA tandis que les isocyanates non bloqués et peu réactifs sur TPE/PA assurent la réticulation de la colle, ainsi que la tenue chimique et la souplesse du joint de colle obtenu.

Selon la présente invention, il a été démontré que, de manière surprenante, le promoteur d'adhérence pouvait être parfaitement utilisé sans nécessiter d'étape préalable d'évaporation de l'eau du joint de colle avant le collage. Par suite, le collage est réalisé directement après application de la colle.

Le procédé selon l'invention autorise en outre l'utilisation synergique d'isocyanates aromatiques encapsulés et d'isocyanates aliphatiques non bloqués, au contraire du procédé existant pour les colles latentes.

Le procédé selon l'invention autorise l'incorporation du promoteur d'adhérence dans le primaire ou dans la colle ou bien à la fois dans le primaire et dans la colle. Dans ce dernier cas, l'affinité entre la colle et le primaire est améliorée.

De préférence, le promoteur d'adhérence de la présente invention est utilisé dans la partie du joint de colle qui est appliquée directement sur la surface du substrat, c'est à dire dans le primaire ou bien dans la colle si on n'utilise pas de primaire.

Bien entendu, ces modes de réalisation préférés de la présente invention n'excluent pas toutes les autres possibilités d'utilisation du promoteur d'adhérence dans le joint de colle, comme par exemple son utilisation dans la colle mais pas dans le primaire intermédiaire entre le substrat et la colle.

### 6-Procédé de fabrication du stratifié

La présente invention concerne également un procédé de fabrication d'un stratifié. Conformément à la présente invention, le collage des types décrits de substrats (S1) sur des substrats (S2), pour la fabrication de stratifiés comprend les étapes décrites ci-dessous.

Selon un premier mode de réalisation avantageux dans le cas où les substrats S1 et S2 sont en (TPE-PA) de même nature ou non, le procédé de fabrication d'un stratifié comprend:
(a) Nettoyage des surfaces S1 et S2 avec une solution de nettoyage.
(b) Séchage à une température comprise dans la gamme allant de 20°C et 120°C ;
(c) Application éventuelle sur S1 et/ou S2 d'une couche de primaire à base aqueuse comprenant le promoteur selon l'invention.
(d) Cuisson de la/des couche(s) de primaire le cas échéant à une température comprise dans ma gamme allant de 60°C à 150°C, pendant 5 minutes, pour activer les groupements isocyanates du promoteur.
(e) Application d'au moins une couche de colle à base aqueuse sur une surface d'au moins un des deux substrats et/ou sur la surface de la/des couche(s) de primaire le cas échéant préalablement déposée(s) sur S1 et/ou S2.

Lors de cette étape (e), ladite colle comprend le promoteur d'adhérence selon l'invention dans le cas où il n'y a pas d'application de primaire préalable, ou bien dans le cas ou un primaire sans promoteur d'adhérence a été appliqué. Dans le cas où un primaire comprenant un promoteur d'adhérence selon l'invention a déjà été appliqué à l'étape (c), ladite colle peut éventuellement comprendre aussi un promoteur d'adhérence selon l'invention, pour plus d'affinité avec le primaire et donc plus d'efficacité d'adhérence.
(f) Cuisson des couches de colles à une température, de l'ordre de 60°C à 150°C, pendant 5 minutes pour activer le promoteur d'adhérence,
(g) Accostage, dès la fin de l'activation, de la surface comportant la couche de colle aqueuse d'un des substrats avec la surface, comportant ou non une couche de colle, de l'autre substrat
(h) Mise sous presse de l'ensemble; puis retrait de la presse
(i) Récupération du produit stratifié.

La pression appliquée lors de l'étape de mise sous presse est de 1 à 15kg/cm2, de préférence 3 à 10kg/cm2.

La mise sous presse peut être faite sous atmosphère humide, l'air ayant une humidité relative HR³ supérieure à 5%, de préférence supérieure à 10%, et mieux supérieure à 20%.

Selon un deuxième mode de réalisation avantageux de la présente invention, dans le cas où S1 est en (TPE-PA) et S2 est de nature chimique différente de (TPE-PA), le procédé de fabrication d'un stratifié comprend:
(a) Nettoyage de la surface S1 avec une solution de nettoyage. Nettoyage et/ ou préparation du substrat S2 adaptés à la nature du substrat, selon des techniques habituelles connues de l'homme du métier.
(b) Séchage de S1 à une température comprise dans la gamme allant de 20°C et 140°C.
(c) Application éventuelle (c'est-à-dire non essentielle) d'une couche de primaire à base aqueuse sur S1, suivie le cas échéant d'une cuisson de ce primaire, ledit primaire comprenant un promoteur d'adhérence selon l'invention.
(d) Application ou non d'une couche de primaire approprié sur le substrat S2 suivie le cas échéant d'une cuisson de ce primaire.
(e) Application d'une couche de colle à base aqueuse sur la surface de S1 ou bien sur la surface du primaire le cas échéant préalablement déposé sur S1, ladite colle comprenant le promoteur d'adhérence selon l'invention dans le cas où il n'y a pas d'application de primaire préalable, ou bien dans le cas ou un primaire sans promoteur d'adhérence a été appliqué. Dans le cas où un primaire comprenant un promoteur d'adhérence selon l'invention a déjà été appliqué à l'étape (c), ladite colle peut éventuellement comprendre aussi un promoteur d'adhérence selon l'invention, pour plus d'affinité avec le primaire et donc plus d'efficacité d'adhérence.
(f) Cuisson de la couche de colle à une température, de l'ordre de 60°C à 150°C.
(g) Application d'une couche de colle sur la surface de S2, ou bien sur la surface du primaire le cas échéant préalablement déposé sur S2. Cette colle est préférentiellement aqueuse et compatible avec la colle déposée sur le substrat S1. Avantageusement, cette colle est identique à celle déposée sur le substrat S1.
(h) Cuisson de la colle. Si c'est la même colle que pour l'étape (f), la cuisson s'effectue à la même température qu'en (f). S'il s'agit d'une autre colle, la température de cuisson est fonction du support et des préconisations du formulateur.
(i) Accostage de la surface comportant la couche de colle aqueuse activée du substrat S1 avec la surface comportant la couche de colle aqueuse activée du substrat S2.
(j) Mise sous presse de l'ensemble ; et après retrait de la presse,
(k) Récupération du produit stratifié.

La pression appliquée lors de l'étape de mise sous presse est de 1 à 15kg/cm2, de préférence 3 à 10kg/cm2;

La mise sous presse peut être faite sous atmosphère humide, l'air ayant une humidité relative HR³ supérieure à 5%, de préférence supérieue à 10% et mieux supérieure à 20%.

Les presses utilisées dans le procédé de l'invention sont les presses classiques dans le domaine de la fabrication des stratifiés.

Appliquée à la fabrication de stratifiés, l'incorporation d'un promoteur d'adhérence dans le primaire et / ou la colle selon la présente invention, permet donc l'emploi d'un procédé qui est à la fois :
- Fiable, en permettant une adhérence améliorée des (TPE-PA) avec les joints de colle aqueux, et
- Sécuritaire, en utilisant un joint de colle totalement aqueux (colle et/ ou primaire compris).

Selon un mode de réalisation avantageux de l'invention, le nettoyage des surfaces des substrats à coller est réalisé avec une solution détergente à base aqueuse, la colle utilisée est aqueuse, de même que l'éventuel primaire utilisé, de sorte que l'émission de solvants au cours du procédé de l'invention est considérablement réduite.

### Exemples

Les exemples ci-dessous illustrent la présente invention sans en limiter la portée. Dans les exemples, sauf indication contraire, tous les pourcentages et parties sont exprimés en masse.

### Substrats :

PEBAX® 5533 : PEBA de type PA12-PTMG (polyamide 12 - polytétraméthylène glycol), grade PEBAX® 5533 SP01 dans les tableaux, commercialisé par la Société ARKEMA.

PEBAX® 7033 : PEBA de type PA12-PTMG (polyamide 12 - polytétraméthylène glycol), commercialisé par la Société ARKEMA.

Le PEBAX® 7033 est plus dur que le PEBAX® 5533

Géométrie des substrats :
Largeur : 15mm
Longueur : 100mm
Epaisseur : 1mm

Dans les exemples suivants, la couche de primaire a une épaisseur (après cuisson) de 1 à 30 µm et la couche de colle une épaisseur (après cuisson) de 30 à 50 µm.

### Promoteur d'adhérence:

Dispercoll ® BL XP 2514 : Isocyanate aromatique du type TDI- dimer désactivé par encapsulation, commercialisé par la Société Bayer Material Science.

### Solution de nettoyage :

MEK : MÉTHYL ÉTHYL CÉTONE (synonyme : 2-butanone).

### Primaires:

W104 : primaire à base aqueuse commercialisé par la Société DONGSUNG sous la dénomination « Aquace® W104 ». (Extrait sec - 30 min à 150°C= 40% en masse de polyuréthane)
ARF 40 : Agent de réticulation aliphatique: ARF-40® commercialisé par la société Dongsung. (Extrait sec - 30 min à 150°C= 83,5% en masse de polyisocyanate)
Dply 171-2 : primaire à base solvant commercialisé par la Société DONGSUNG sous la dénomination « D-Ply® 171-2 » (Extrait sec - 30 min à 150°C=10% en masse).
Agent de réticulation RFE® commercialisé par la société Bayer. : Solution de tris(p-isocyanatophényl) thiophosphate dans l'étlzyl acétate (Extrait sec - 30 min à 150°C= 26,9% en masse dans l'éthyl acétate).

### Colle:

W01 : colle aqueuse commercialisée par la Société DONGSUNG sous la dénomination «Aquace® W01» : Solution de polyuréthane modifié en solvant MEK + Ethylacétate (Extrait sec - 30 min 150°C= 46.9% en masse de polyuréthane).
ARF 40 : Agent de réticulation ARF-40® commercialisé par la société Dongsung. (Extrait sec - 30 min à 150°C= 83,5% en masse de polyisocyanate).

### Matériel:

Les essais ont été réalisés en utilisant le matériel suivant :
   - presse hydraulique (8 à 15 kg/cm2) ;
   - étuve à convection Heraeus consigne 70°C, ventilée ;
   - emporte pièce ISO 34 ;
   - presse pneumatique pour la découpe d'éprouvettes.

### Mode opératoire général d'assemblage :

### Exemples

### ➢ Préparation du substrat (S1)

- Solution de nettoyage : MEK
- Nettoyage au chiffon ou trempage d'une face lisse du substrat S1, temps de nettoyage : 3 à 20s
- Séchage 5 minutes à des températures comprises entre 20 à 120°C.
- Application au pinceau d'un primaire aqueux (sauf dans le cas des exemples selon l'invetion n° : 26 et 27).

Le primaire aqueux comprend un premier composant et un deuxième composant. Dans les essais des différents tableaux, le deuxième composant correspond à 5% en masse d'agent de réticulation sur la masse totale du primaire. Ce deuxième composant correspond soit à l'ARF-40® pour les essais comparatifs n° : 1, 2, 3, 4, 5, 6 et 7 soit au Dispercoll BL XP 2514 pour les exemples selon l'invention n° : 10, 11, 12, 13, 14, 15, 16, 17, 18 et 22;
- Cuisson 5 minutes à 60°C à 150°C en étuve ventilée ;
- Refroidissement 2 minutes à température ambiante ;
- Application au pinceau de la colle aqueuse ;
   De même, dans ces essais, la colle aqueuse comprend un premier composant et un deuxième composant. Dans les essais des différents tableaux, le deuxième composant correspond à 5% en masse d'agent de réticulation sur la masse totale du primaire. Ce deuxième composant correspond à l'ARF-40® pour les essais n° : 1 à 25 ou au Dispercoll BL XP 2514 pour les exemples selon l'invention n° : 26 et 27 qui comprennent une colle avec un promoteur d'adhérence selon l'invention;
- Cuisson : 5 minutes à 70°C en étuve ventilée, sauf pour les exemples selon l'invention n° : 26 et 27.

### ➢ Préparation du substrat (S2)

Dans le cas où le substrat S2 est de nature (TPE-PA) et le primaire utilisé est à base aqueuse, la préparation du substrat S2 est identique à celle du substrat S1 défini dans le paragraphe précédent désigné : Préparation du support S1.

Dans le cas où le substrat S2 est de nature (TPE-PA) et le primaire utilisé est à base solvent, la préparation du substrat S2 est décrite comme suit:
- Nettoyage au solvant MEK d'une face lisse du substrat S2; Temps de nettoyage 3 à 20s.
- Séchage 2 minutes à température ambiante ;
- Application du primaire Dply 171-2 (+5% agent de réticulation RFE®) au pinceau ;
- Séchage 5 minutes à 70°C en étuve ventilée ;
- Refroidissement 2 minutes à température ambiante ;
- Application de la colle W01 (+5% agent de réticulation Art-40®) aqueuse au pinceau ;
- Séchage 5 minutes à 70°C en étuve ventilée.

### ➢ Essais de pelage

L'adhérence des substrats est directement liée aux valeurs de forces de pelage.

On a effectué sur les stratifiés de chacun des essais n° 1 à 27 un test de pelage selon la norme ISO11339, vitesse 100mm/minute. Les essais de pelage sont faits de préférence dans un délai compris entre 2 heures et 48 heures après le collage.

Les résultats des différents essais sont donnés dans les tableaux 1 à 4.

Les résultats montrent, quelle que soit la dureté du Pebax® utilisé, des résistances au pelage élevées, bien supérieures à 3 Kg/cm grâce au procédé de fabrication de stratifiés selon l'invention. Les résultats d'adhérence sont optimisés, avec des forces de pelage supérieures à 8, notamment pour les stratifiés dont les deux substrats sont à base (TPE-PA), et pour des températures d'activation (cuisson) de l'ordre de 90°C, ou 100°C pour une adhérence encore meilleure.

L'utilisation du promoteur d'adhérence dans le joint de colle selon l'invention ne nécessite pas d'étape spécifique d'évaporation d'eau préalable. L'accostage des deux substrats peut être fait directement après une rapide activation thermique (de 5 minutes environ) de la couche de joint de colle appliquée sur au moins un des substrats. L'accostage est réalisé sous presse à température ambiante.

Le tableau 1 montre les résultats de force de pelage pour différents essais réalisés sur substrats Pebax® 5533 et sur substrats Pebax® 7033, avec des primaires sans promoteur d'adhérence (ARF 40) ou bien avec promoteur d'adhérence (Dispercoll BL XP 2514), pour des températures d'activation (cuisson) du primaire égales à 90°C ou 100°C.

Les exemples n° : 10, 14 et 18, 22 selon l'invention montrent une adhérence régulière et un niveau d'adhérence supérieur à celui des essais comparatifs correspondants (essais n° : 2, 3 et 5, 6 respectivement) qui n'utilisent pas de promoteur d'adhérence selon la présente invention dans le primaire.

Les résultats d'adhérence sont encore améliorés pour les températures d'activation de 100°C.

Comparaison des exemples selon l'invention n° : 10 du tableau 1 et n° : 11 du tableau 2 :
Sur les substrats Pebax/Pebax amorphe, l'efficacité d'adhérence du promoteur d'adhérence dans le primaire est décuplée grâce à la présence de Peba amorphe. On note ici les effets synergiques du promoteur d'adhérence dans le joint de colle selon la présente invention et du promoteur d'adhérence (peba amorphe) dans le matériau Peba, tel que défini dans la demande de brevet française n° : 07.58478.
Plus le ratio massique de Peba amorphe augmente (5%, 10%, 15%) dans le substrat Peba, plus l'efficacité de l'adhérence augmente (Force de pelage supérieure à 7 kg/cm).
Les exemples selon l'invention n°12, 13, 26 et 27 du tableau 2 montrent une force de pelage supérieure à 6 ou 7 kg/cm, ceci quel que soit le mode d'incorporation du promoteur d'adhérence selon l'invention : soit dans le primaire, soit dans la colle (sans couche de primaire préalable) dans ces exemples.
Les tableaux 3 et 4 montrent qu'une augmentation de la température d'activation (100°C au lieu de 90°C) entraîne une augmentation du niveau d'adhérence (Forces de pelage supérieures à 8 ou 10 kg/cm dans tous les cas).

Le tableau 4 montre que, comparée à l'adhérence sur substrat Pebax® 7033 pur (exemples 18 et 22), le niveau d'adhérence avec un promoteur d'adhérence selon l'invention sur substrat Pebax® 7033/ Peba amorphe est décuplé par l'effet synergique du promoteur (A) « Peba amorphe » tel que défini dans la demande française n° : 07.58478 et du promoteur (P) selon l'invention.

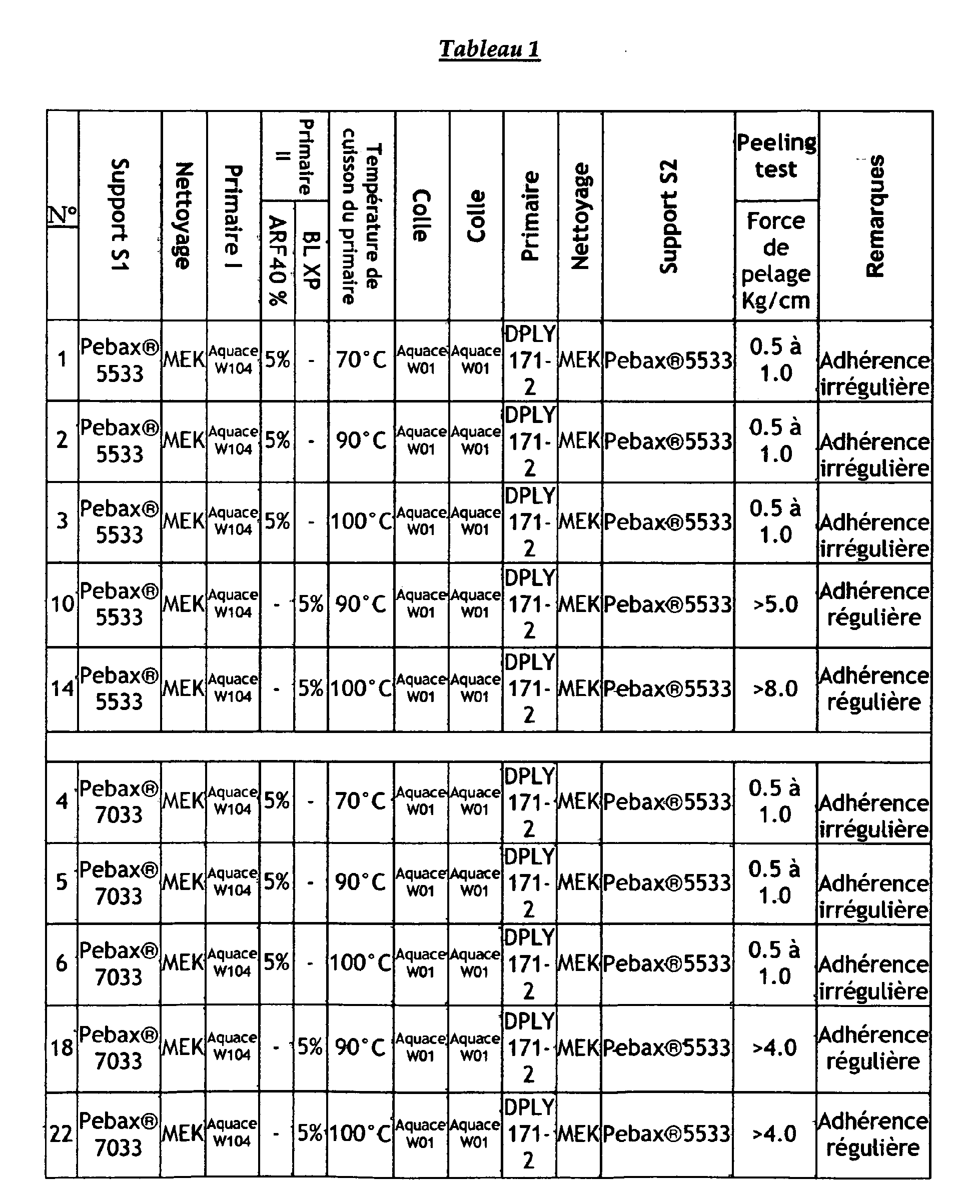

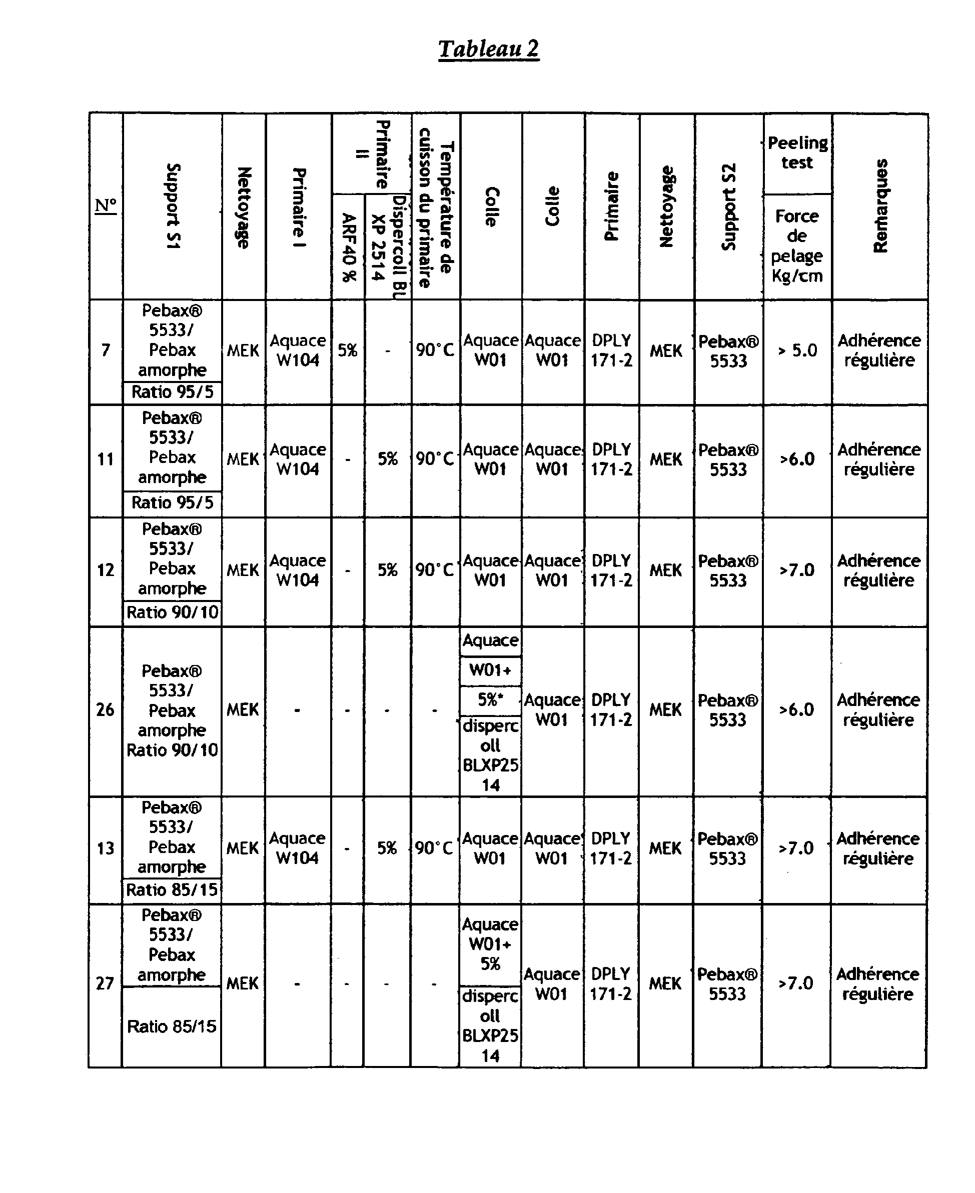

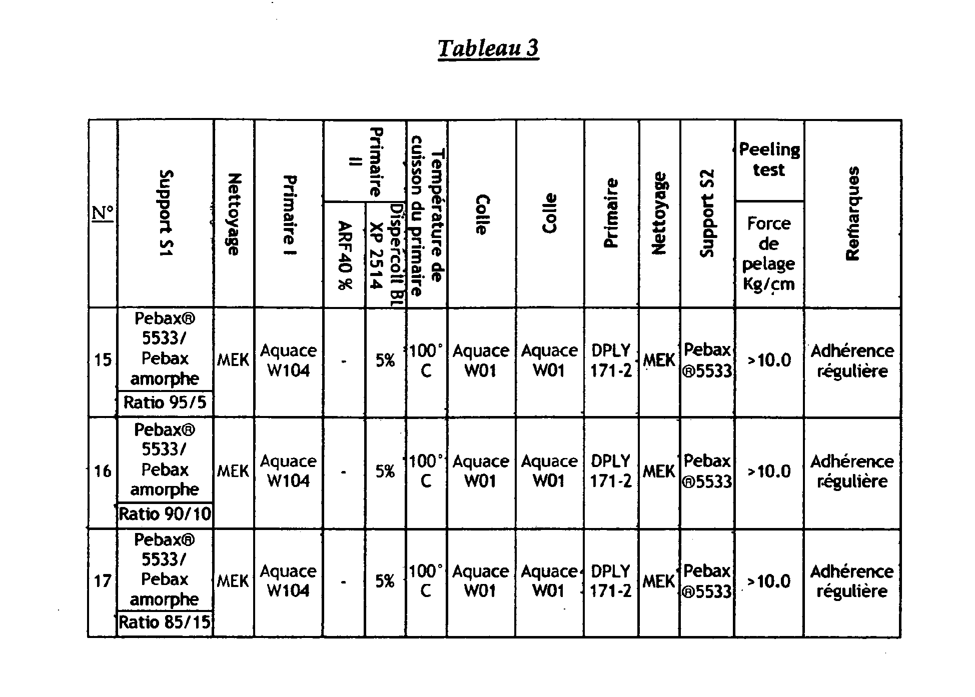

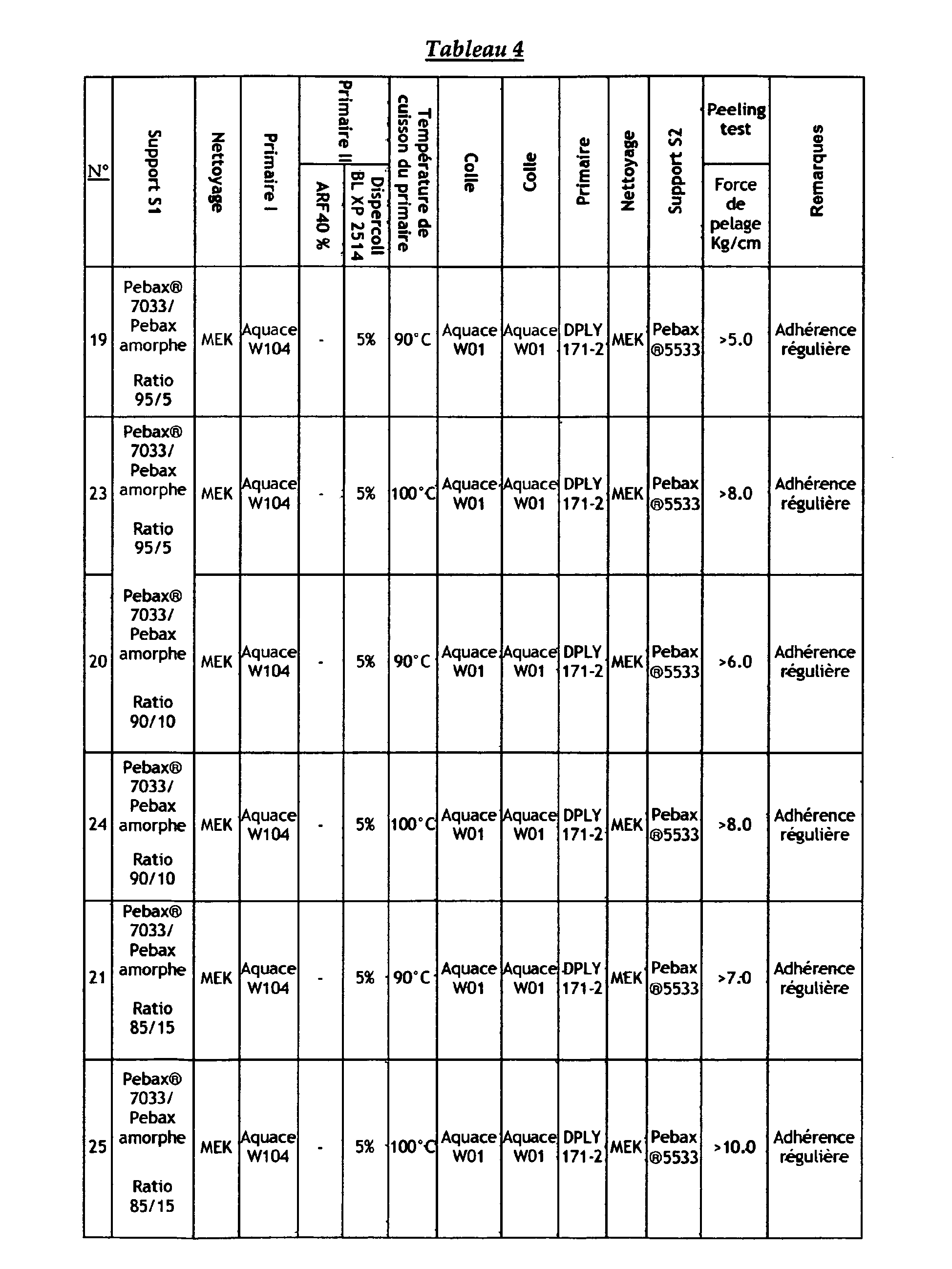

## Revendications

1. Utilisation d'un promoteur d'adhérence encapsulé (P) en quantité efficace dans un joint de colle aqueux, ledit joint de colle aqueux étant destiné à coller une surface d'un premier substrat (S1) à une surface d'un second substrat (S2), l'un au moins (S1) desdits deux substrats comprenant un matériau (TPE-PA) comprenant au moins un élastomère thermoplastique (TPE) et/ou au moins un polyamide (PA), ledit promoteur d'adhérence (P) comprenant au moins une molécule organique comportant au moins deux fonctions isocyanate bloquées par encapsulation de ladite molécule organique.

2. Utilisation selon la revendication 1, dans laquelle ledit joint de colle aqueux comprend au moins une couche de primaire aqueux et/ou au moins une couche de colle aqueuse, ledit promoteur d'adhérence encapsulé (P) étant utilisé dans ledit primaire aqueux et/ou ladite colle aqueuse selon une teneur en promoteur d'adhérence (P) représentant de 0,5 à 20% en masse de matière active, de préférence de 0,5 à 10% en masse de matière active, sur la masse totale du joint de colle.

3. Utilisation selon la revendication 2, dans laquelle ladite colle et/ou ledit primaire sont sous forme bi-composant :
- un premier composant comprenant une résine fonctionnalisée ou non, en solution ou en dispersion dans l'eau, et réactif avec les fonctions isocyanates,
- un deuxième composant comprenant un réticulant en solution ou en dispersion dans l'eau, ledit réticulant comprenant au moins une molécule à groupement(s) isocyanate(s) aliphatique(s) bloqué(s) ou non bloqué(s) et/ou au moins ledit promoteur d'adhérence encapsulé (P).

4. Utilisation selon la revendication 3, dans laquelle ledit premier composant et ledit deuxième composant sont inclus dans une composition monocomposant de colle et/ou de primaire prête à l'emploi.

5. Utilisation selon l'une des revendications 1 à 4, dans laquelle ledit promoteur d'adhérence encapsulé (P) comprend au moins une des molécules organiques aromatiques à groupements isocyanates suivantes : le 4,4'-methylene di(phenylisocyanate) (MDI), l'isophorone diisocyanate (IPDI), le toluylene diisocyanate (TDI), le toluylene diisocyanate-urethdione (TDI-U), TDI-urée, naphtalene-1,5-diisocyanate (NDI), 3,3'-dimethyl biphenyl-4,4'-diisocyanate (TODI) et l'isocyanurate de IPDI (IPDI-T) et leurs mélanges.

6. Utilisation selon l'une quelconque des revendications précédentes, dans laquelle ledit promoteur d'adhérence encapsulé comprend au moins un isocyanate aromatique de type TDI et/ou de type IPDI.

7. Utilisation selon l'une quelconque des revendications précédentes, dans laquelle ladite encapsulation est réalisée au moyen d'au moins un agent encapsulant choisi parmi les amines aliphatiques et leurs mélanges.

8. Utilisation selon l'une quelconque des revendications précédentes, dans laquelle ledit au moins un agent encapsulant est choisi parmi : la 2-pentaméthylène-1,5-diamine et ses isomères et homologues tels que la 1,6-hexaméthylène diamine, di-sec-butyl amine ; éthylène diamine; 1,3-propylène diamine; diéthylène triamine; triethylène tétramine; 3,3'-diméthyl-4,4'-diaminodicyclohexyl méthane; méthylnonane diamine; isophorone diamine; 4,4'-diaminodicyclohexyl methane ; alkanol amine et diamine, telle que l'éthanolamine et diéthanolamine.

9. Utilisation selon l'une quelconque des revendications précédentes, dans laquelle ledit au moins un TPE est choisi parmi les COPE et/ou les TPU et/ ou les PEBA et/ ou leur mélange.

10. Utilisation selon l'une quelconque des revendications précédentes, dans laquelle le matériau du substrat S1 et le matériau du substrat S2 sont de même nature.

11. Utilisation selon l'une quelconque des revendications 1 à 9, dans laquelle le matériau du substrat S1 et le matériau du substrat S2 sont de nature différente, S2 étant choisi parmi les TPE, les homopolymères et les copolymères tels que les polyoléfines; les polyamines ; les polyamides ; les polyesters; les polyéthers ; les polyesteréthers ; les polyimides; les polycarbonates ; les résines phénoliques ; les polyuréthanes réticulés ou non, notamment sous forme de mousse ; les poly(éthylène acétate de vinyle) ; les élastomères naturels ou synthétiques tels que les polybutadiènes, les polyisoprènes, les styrène-butadiène-styrène (SBS), les styrène-butadiène-acrylonitrile (SBN), les polyacrylonitriles ; les tissus naturels ou synthétiques, notamment les tissus en fibres de polymères organiques tels que les tissus en fibres de polypropylène, polyéthylène, polyesters, alcool polyvinylique, polyacétate de vinyle, polychlorure de vinyle, polyamide ; les tissus en fibres de verre ou en fibres de carbone, ainsi que les matériaux comme le cuir, le papier et le carton ; et leurs mélanges.

12. Procédé d'assemblage par collage de deux substrats S1 et S2 au moyen d'un joint de colle aqueux, l'un au moins desdits substrats étant en matériau (TPE-PA) comprenant au moins un élastomère thermoplastique TPE et/ou au moins un polyamide PA, le dit procédé comprenant les étapes suivantes dans l'ordre :
(a) nettoyage de la surface du/des substrats (TPE-PA) avec une solution de nettoyage ;
(b) application sur ladite surface d'au moins un des deux substrats, d'un joint de colle aqueux comprenant un promoteur d'adhérence tel que défini à l'une quelconque des revendications précédentes;
(c) cuisson du joint de colle à une température comprise dans la gamme allant de 60°C à 150°C ;
(d) accostage de ladite surface comportant le joint de colle aqueux d'un des substrats avec une surface de l'autre substrat pour former un ensemble comprenant les deux substrats avec entre eux le joint de colle aqueux;
(e) mise sous presse de l'ensemble;
(f) et après retrait de la presse, récupération de l'ensemble sous forme d'un produit stratifié.

13. Procédé selon la revendication 12, dans lequel l'étape (b) d'application dudit joint de colle comprend:
- l'application d'une couche de primaire comprenant un promoteur d'adhérence P à base d'isocyanate aromatique hautement réactif encapsulé ;
- l'application d'une couche de colle bicomposant à base d'isocyanate aliphatique non bloqué faiblement réactif.

14. Produit stratifié, notamment semelle de chaussure, comprenant un premier substrat (S1) et un second substrat (S2) adhérant l'un à l'autre au moyen d'un joint de colle aqueux (J), ledit joint de colle aqueux comprenant au moins un promoteur d'adhérence encapsulé conforme à celui défini selon l'une quelconque des revendications 1 à 11.

15. Joint de colle aqueux promoteur d'adhérence, destiné à coller une surface d'un premier substrat (S1) à une surface d'un second substrat (S2), l'un au moins desdits substrats comprenant un matériau (TPE-PA) comprenant au moins un élastomère thermoplastique (TPE) et/ou au moins un polyamide (PA), ledit joint de colle comprenant un promoteur d'adhérence encapsulé conforme à celui défini dans l'une quelconque des revendications 1 à 11.

16. Utilisation selon l'une quelconque des revendications 1 à 11, dans laquelle ledit au moins un substrat TPE/PA comprend au moins un matériau en TPE amorphe ou quasi amorphe et/ou en polyamide amorphe ou quasi amorphe.

17. Utilisation selon la revendication 16, dans laquelle ledit matériau à une teneur en TPE amorphe ou quasi amorphe et/ou en polyamide amorphe ou quasi amorphe représentant de 5 à 70% en poids du poids total dudit matériau.

18. Utilisation selon la revendication 16 ou 17, dans laquelle ledit au moins un TPE amorphe ou quasi amorphe est choisi parmi : les COPE amorphes ou quasi amorphes et/ou les TPU amorphes ou quasi amorphes et/ ou les PEBA amorphes ou quasi amorphes.

## Claims

1. Use of an encapsulated adhesion promoter (P) in an effective amount in an aqueous adhesive joint, said aqueous adhesive joint being intended to bond a surface of a first substrate (S1) to a surface of a second substrate (S2), at least one (S1) of said two substrates comprising a material (TPE-PA) comprising at least one thermoplastic elastomer (TPE) and/or at least one polyamide (PA), said adhesion promoter (P) comprising at least one organic molecule having at least two isocyanate functions blocked by encapsulation of said organic molecule.

2. Use according to Claim 1, in which said aqueous adhesive joint comprises at least one layer of aqueous primer and/or at least one layer of aqueous adhesive, said encapsulated adhesion promoter (P) being used in said aqueous primer and/or said aqueous adhesive with an adhesion promoter (P) content representing from 0.5 to 20% by weight of active material, preferably from 0.5 to 10% by weight of active material, out of the total weight of the adhesive joint.

3. Use according to Claim 2, in which said adhesive and/or said primer are in two-component form:
- a first component comprising a functionalized or umunctionalized resin in solution or in dispersion in water that reacts with the isocyanate functions; and
- a second component comprising a crosslinker in solution or in dispersion in water, said crosslinker comprising at least one molecule having blocked or unblocked aliphatic isocyanate group(s) and/or at least said encapsulated adhesion promoter (P).

4. Use according to Claim 3, in which said first component and said second component are included in a ready-to-use, single-component adhesive and/or primer composition.

5. Use according to one of Claims 1 to 4, in which said encapsulated adhesion promoter (P) comprises at least one of the following aromatic organic molecules having isocyanate groups: 4,4'-methylene di(phenylisocyanate) (MDI), isophorone diisocyanate (IPDI), tolylene diisocyanate (TDI), tolylene diisocyanate-uretdione (TDI-U), TDI-urea, naphthalene-1,5-diisocyanate(NDI), 3,3'-dimethyl biphenyl-4,4'-diisocyanate (TODI) and the isocyanurate of IPDI (IPDI-T) and mixtures thereof.

6. Use according to any one of the preceding claims, in which said encapsulated adhesion promoter comprises at least one aromatic isocyanate of TDI type and/or of IPDI type.

7. Use according to any one of the preceding claims, in which said encapsulation is carried out by means of at least one encapsulating agent chosen from aliphatic amines and mixtures thereof.

8. Use according to any one of the preceding claims, in which said at least one encapsulating agent is chosen from: 2-pentamethylene-1,5-diamine and isomers and homologues thereof, such as 1,6-hexamethylenediamine, di-sec-butylamine; ethylenediamine; 1,3-propylenediamim; diethylenetriamine; triethylenetetramine; 3,3'-dimethyl-4,4'-diaminodicyclohexylmethane; methylnonanediamine; isophoronediamme; 4,4'-diaminodicyclohexylmethane; alkanol amine and diamine, such as ethanolamine and diethanolamine.

9. Use according to any one of the preceding claims, in which said at least one TPE is chosen from COPEs and/or TPUs and/or PEBAs and/or a mixture thereof.

10. Use according to any one of the preceding claims, in which the material of substrate S1 and the material of substrate S2 are of the same nature.

11. Use according to any one of Claims 1 to 9, in which the material of substrate S1 and the material of substrate S2 are of a different nature, S2 being chosen from TPEs, homopolymers and copolymers such as polyolefins; polyamines; polyamides; polyesters; polyethers; polyester ether; polyamides; polycarbonates; phenolic resins; crosslinked or uncrosslinked polyurethanes, especially in the form of foam; poly(ethylene/vinyl acetate)s; natural or synthetic elastomers such as polybutadienes, polyisoprenes, styrene-butadiene-styrenes (SBSs), styrene-butadiene-acrylonitriles (SBNs), polyacrylonitriles; natural or synthetic fabrics, especially fabrics made of organic polymer fibres such as fabrics made of polypropylene, polyethylene, polyester, polyvinyl alcohol, polyvinyl acetate, polyvinyl chloride or polyamide fibres, fabrics made of glass fibres or of carbon fibres, and also materials such as leather, paper and board; and mixtures thereof.

12. Process of adhesive bonding of two substrates S1 and S2 by means of an aqueous adhesive joint, at least one of said substrates being made of a material (TPE-PA) comprising at least one thermoplastic elastomer TPE and/or at least one polyamide PA, said process comprising the following steps, in the order:
(a) cleaning the surface of the (TPE-PA) substrate(s) with a cleaning solution;
(b) applying of an aqueous adhesive joint comprising an adhesion promoter as defined in any one of the preceding claims to said surface of at least one of the two substrates;
(c) baking the adhesive joint at a temperature within the range extending from 60°C to 150°C ;
(d) bringing said surface comprising the aqueous adhesive joint of one of the substrates into contact with one surface of the other substrate to form an assembly comprising the two substrates with the aqueous adhesive joint between them;
(e) pressing the assembly; and
(f) after removal from the press, recovering the assembly in the form of a laminated product.

13. Process according to Claim 12, in which the step (b) of applying said adhesive joint comprise:
- the application of a layer of primer comprising an adhesion promoter P based on an encapsulated, highly reactive, aromatic isocyanate;
- the application of a layer of two-component adhesive based on a weakly reactive, unblocked, aliphatic isocyanate.

14. Laminated product, especially a shoe sole, comprising a first substrate (S1) and a second substrate (S2) that adhere to one another by means of an aqueous adhesive joint (J), said aqueous adhesive joint comprising at least one encapsulated adhesion promoter in accordance with that defined according to any one of Claims 1 to 11.

15. Aqueous adhesive joint that is an adhesion promoter, intended to bond a surface of a first substrate (S1) to a surface of a second substrate (S2), at least one of said substrates comprising a material (TPE-PA) comprising at least one thermoplastic elastomer (type) and/or at least one polyamide (PA), said adhesive joint comprising an encapsulated adhesion promoter in accordance with that defined according to any one of Claims 1 to 11.

16. Use according to any one of Claims 1 to 11, in which said at least one TPE/PA substrate comprises at least one material made of amorphous or quasi-amorphous TPE and/or made of amorphous or quasi-amorphous polyamide.

17. Use according to Claim 16, in which said material has a content of amorphous or quasi-amorphous TPE and/or of amorphous or quasi-amorphous polyamide that represents from 5 to 70% by weight of the total weight of said material.

18. Use according to Claim 16 or 17, in which said at least one amorphous or quasi-amorphous TPE is chosen from: amorphous or quasi-amorphous COPEs and/or amorphous or quasi-amorphous TPUs and/or amorphous or quasi-amorphous PEBAs.

## Patentansprüche

1. Verwendung eines eingekapselten Haftungspromotors (P) in einer wirksamen Menge in einer wässrigen Klebstoffverbindungsstelle, wobei die wässrige Klebstoffverbindungsstelle dazu vorgesehen ist, eine Oberfläche eines ersten Substrats (S1) an eine Oberfläche eines zweiten Substrats (S2) zu kleben, wobei mindestens eines (S1) der beiden Substrate ein Material (TPE-PA) umfasst, das mindestens ein thermoplastisches Elastomer (TPE) und/oder mindestens ein Polyamid (PA) enthält, wobei der Haftungspromotor (P)mindestens ein organisches Molekül umfasst, das mindestens zwei, durch. Verkapselung des organischen Moleküls bockierte Isocyanatfunktionen aufweist.

2. Verwendung nach Anspruch 1, wobei die wässrige Klebstoffverbindungsstelle zumindest eine wässrige Primerschicht und/oder zumindest eine wässrige Klebstoffschicht aufweist, wobei der eingekapselte Haftungspromotor (P) in dem wässrigen Primer und/oder in dem wässrigen Klebstoff in einem Mengenanteil des Haftungspromotors (P) eingesetzt wird, der 0,5 bis 20 Gew.-% der wirksamen Substanz und vorzugsweise 0,5 bis 10 Gew.-% der wirksamen Substanz, bezogen auf das Gesamtgewicht der Klebstoffverbindungsstelle, ausmacht.

3. Verwendung nach Anspruch 2, wobei der Klebstoff und/oder der Primer in Form von zwei Komponenten vorliegen:
- einer ersten Komponente, die in Lösung oder in Dispersion in Wasser ein funktionalisiertes oder nicht funktionalisiertes Harz enthält und gegenüber den Isocyanatfunktionen reaktiv ist,
- einer zweiten Komponente, die in Lösung oder in Dispersion in Wasser ein Vernetzungsmittel enthält, wobei das Vernetzungsmittel zumindest ein Molekül mit Isocyanatgruppe(n), die blockiert oder nicht blockiert und aliphatisch ist (sind), und/oder zumindest den eingekapselten Haftungspromotor (P) umfasst.

4. Verwendung nach Anspruch 3, wobei die erste Komponente und die zweite Komponente in einer einkomponentigen gebrauchsfertigen Zusammensetzung des Klebstoffes und/oder des Primers enthalten sind.

5. Verwendung nach einem der Ansprüche 1 bis 4, wobei der eingekapselte Haftungspromotor (P) zumindest eines der folgenden aromatischen organischen Moleküle mit Isocyanatgruppen um-fasst: 4,4'-Methylenbis(phenylisocyanat) (MDI), Isophorondiisocyanat (IPDI), Toluoldiisocyanat (TDI), Toluoldiisocyanat-uretdion (TD1-U), TDI-harnstoff, Naphthalin-1,5-diisocyanat (NDI), 3,3'-Dimethylbiphenyl-4,4'-diisocyanat (TODI) und das Isocyanurat von IPDI (IPDI-T) und deren Gemische.

6. Verwendung nach einem der vorhergehenden Ansprüche, wobei der eingekapselte Haftungspromotor zumindest ein aromatisches Isocyanat vom Typ TDI und/oder vom Typ IPDI umfasst.

7. Verwendung nach einem der vorhergehenden Ansprüche, wobei die Verkapselung mit Hilfe mindestens eines Verkapselungsmittels realisiert wirt, das unter den aliphatischen Aminen und deren Gemischen ausgewählt ist.

8. Verwendung nach einem der vorhergehenden Ansprüche, wobei das zumindest eine Verkapselungsmittei ausgewählt ist unter: 2-Pentamethyleh-1,5-diamin und seinen Isomeren und Homologen wie 1,6-Hexamethylendiamin, Di-sek-butylamin; Ethylendiamin; 1,3- Propylendiamin; Diethylentriamin; Triethylentetramin; 3,3'-Dimethyl-4,4'-diaminodicyclohexylmethan; Methylnonandiamin; Isophorondiamin; 4,4-Diaminodicyclohexylmethan ; Alkanolamin und -diamin, wie Ethanolamin und Diethanolamin.

9. Verwendung nach einem der vorhergehenden Ansprüche, wobei das zumindest eine TPE unter den COPE und/oder den TPU und/oder den PEBA und/oder deren Gemischen ausgewählt ist.

10. Verwendung nach einem der vorhergehenden Ansprüche, wobei das Material des Substrats S1 und das Material des Substrats S2 von der gleichen Art sind.

11. Verwendung nach einem der Ansprüche 1 bis 9, wobei, wobei das Material des Substrats S1 und das Material des Substrats unterschiedlicher Art sind, wobei S2 ausgewählt ist unter den TPE, den Homopolymeren und Copolymeren, wie Polyolefinen; Polyaminen.; Polyamiden; Polyestern; Polyethern-, Polyesterethern, Polyimiden; polycarbonaten; Phenolharzen; vernetzten oder nicht vernetzten Polyurethanen insbesondere in Schaumform; Po ly(ethylenvinylacetat); natürlichen oder synthetischen Elastomeren wie Polybutadienen, Polyisoprenen, Styrol-Butadien-Styrol (SBS), Styrol-Butadien-Äcrylnitril (SBN), Polyacrylnitrilen; natürlichen oder synthetischen Geweben, insbesondere Geweben aus Fasern organischer Polymere wie Geweben aus Polypropylenfasern, Polyethylenfasern, Polyesterfasern, Polyvinylalkoholfasern, Polyvinylacentatfasern, Polyvinylchloridfasern, Polyamidfasern; Geweben aus Glasfasern oder Kohlenstofffasern, sowie Material wie Leder, Papier und Pappe; und deren Gemischen.

12. Verfahren zum Zusammenfügen von zwei Substraten S1 und S2 durch Verkleben mittels einer wässrigen Klebstoffverbindungsstelle, wobei mindestens eines der beiden Substrate aus einem Material (TPE-PA) gebildet ist, das mindestens ein thermoplastisches Elastomer (PE) und/oder mindestens ein Polyamid (PA) umfasst, wobei das Verfahren in der angegebenen Reihenfolge die folgenden Schritte umfasst:
(a) Reinigen der Oberfläche des/der Substrate (TPE-PA) mit einer Reinigungslösung;
(b) Aufbringen einer wässrigen Klebstoffverbindungsstelle, die einen wie in einem der vorhergehenden Ansprüche definierten Haftungspromotor enthält, auf die Oberfläche mindestens eines der beiden Substrate;
(c) Erwärmen der Klebstoffverbindungsstelle auf eine Temperatur im Bereich von 60 bis 150°C;
(d) Anlegen der Oberfläche eines der Substrate, die die wässrige Klebstoffverbindungsstelle aufweist, an eine Oberfläche des anderen Substrates, um eine Einheit, zu bilden, die die beiden Substrate und zwischen ihnen die wässrige Klebstoffverbindungsstelle umfasst;
(e) Zusammenpressen der Einheit, in einer Presse;
(f) und nach Abheben der Presse Gewinnen der Einheit in Form eines Schichtmaterials.

13. Verfahren nach Anspruch 12. wobei Schritt (b), in dem die Klebstoffverbmdungsstelle aufgebracht wird, umfasst:
- Auftragen einer Primerschicht, die einen Haftungspromotor P auf der Basis eines eingekapselten hochreaktiven aromatisehen Isocyanats umfasst;
- Auftragen einer Zweikomponenten-Klebstoffschicht auf der Basis eines nicht eingekapselten schwach reaktiven aromatischen Isocyanats.

14. Schichtenförmiges Produkt, insbesondere Schuhsohle, das ein erstes Substrat (S1) und ein zweites Substrat (S2) umfasst, die mittels einer wässrigen Klebstoffverbindungsstelle (J) aneinander haften, wobei die wässrige Klebstoffverbindungsstelle zumindest einen wie in einem der Ansprüche 1 bis 11 definierten eingekap selten Haftungspromotor enthält.

15. Haftungspromotor für wässrige Klebstoffverbindungsstellen, der dazu vorgesehen ist, die Oberfläche eines ersten Substrats (S1) mit der Oberfläche eines zweiten Substrats (S2) zu verkleben, wobei mindestens eines der Substrate ein Material (TPE- PA) ent hält, das mindestens ein thermoplastisches Elastomer (TPE) und/oder mindestens ein Polyamid (PA) umfasst, wobei die Klebstoffverbindungsstelle zumindest einen wie in einem der Ansprüche 1 bis 11 definierten eingekapselten Haftungspromotor enthält.

16. Verwendung nach einem der Ansprüche 1 bis 11, wobei das zumindest eine Substrat TPE/PA zumindest eine amorphes oder fast amorphes TPE-Material und/oder ein amorphes oder fast amorphes Polyamid umfasst.

17. Verwendung nach Anspruch 16, wobei das Material mit einem Gehalt an amorphem oder fast amorphem. TPE und/oder amorphem oder fast amorphem Polyamid 5 bis 70 Gew.-% des Gesamtgewichts des Materials ausmacht.

18. Verwendung nach Anspruch 16 oder 17, wobei das zumindest eine amorphe oder fast amorphe TPE ausgewählt ist unter:
amorphen oder fast amorphen COPE und/oder amorphen oder
fast amorphen TPU und/oder amorphen oder fast amorphen PEBA.
